(19) Europäisches Patentamt / European Patent Office / Office européen des brevets

(11) **EP 3 235 860 B1**

(12) **EUROPEAN PATENT SPECIFICATION**

(45) Date of publication and mention
of the grant of the patent:
**26.06.2019 Bulletin 2019/26**

(51) Int Cl.:
*C08J 9/18* *(2006.01)*     *C08L 23/12* *(2006.01)*
*C08L 23/10* *(2006.01)*     *C08J 9/00* *(2006.01)*
*C08J 9/232* *(2006.01)*     *C08J 9/12* *(2006.01)*

(21) Application number: **15869903.3**

(22) Date of filing: **11.12.2015**

(86) International application number:
**PCT/JP2015/084793**

(87) International publication number:
**WO 2016/098698 (23.06.2016 Gazette 2016/25)**

(54) **POLYPROPYLENE RESIN FOAMED PARTICLES**

GESCHÄUMTE POLYPROPYLENHARZTEICHEN

PARTICULES EXPANSÉES DE RÉSINE DE POLYPROPYLÈNE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **17.12.2014 JP 2014254902**

(43) Date of publication of application:
**25.10.2017 Bulletin 2017/43**

(73) Proprietor: **Kaneka Corporation
Osaka-shi, Osaka 530-8288 (JP)**

(72) Inventor: **MIURA, Shintaro
Settsu-shi
Osaka 566-0072 (JP)**

(74) Representative: **Vossius & Partner
Patentanwälte Rechtsanwälte mbB
Siebertstrasse 3
81675 München (DE)**

(56) References cited:
**EP-A1- 1 829 919**     **WO-A1-2006/054727**
**WO-A1-2009/051035**     **JP-A- H08 183 873**
**JP-A- 2010 144 078**     **JP-A- 2014 173 012**
**JP-A- 2014 173 012**

**Description**

Technical Field

The present invention relates to expanded polypropylene resin particles obtained from polypropylene resins and a polyethylene resin.

Background Art

A polypropylene resin in-mold expanded molded product, which is obtained with the use of expanded polypropylene resin particles obtained from a polypropylene resin, has characteristics such as being easily shaped, being light in weight, and being heat insulating, which are advantages of an in-mold expanded molded product. In comparison with a polystyrene resin in-mold expanded molded product which is obtained with the use of expanded polystyrene resin particles, a polypropylene resin in-mold expanded molded product is superior in terms of chemical resistance, heat resistance, strain recovery rate after compression, and the like. In comparison with a polyethylene resin in-mold expanded molded product which is obtained with the use of expanded polyethylene resin particles, a polypropylene resin in-mold expanded molded product is superior in terms of dimension accuracy, heat resistance, compressive strength, and the like. Because of these characteristics, a polypropylene resin in-mold expanded molded product is put to a wide range of use such as not only automobile interior materials and automobile bumper core materials but also heat insulating materials, shock-absorbing packing materials, and returnable containers.

As described above, a polypropylene resin in-mold expanded molded product is superior to a polyethylene resin in-mold expanded molded product in terms of heat resistance and compressive strength. However, with a polypropylene resin in-mold expanded molded product, a molding temperature during in-mold foaming molding becomes high. Therefore, a high steam pressure is necessary during, for example, in-mold foaming molding with the use of steam. This tends to cause utility costs to be high.

In order to avoid such problems, certain techniques have been proposed, examples of which encompass: (i) techniques in which a low-melting polypropylene resin having a melting point of 140°C or lower is used (e.g. Patent Literature 1), (ii) techniques in which a mixture of a low-melting polypropylene resin and a high-melting polypropylene resin is used (e.g. Patent Literatures 2, 4-8 and 13), and (iii) techniques in which a low-melting metallocene polypropylene resin, which is polymerized by use of a metallocene catalyst, is used (e.g. Patent Literature 3). In addition to the literatures above, Patent Literature 9 can be listed as a literature which discloses a technique for producing an expanded polypropylene resin particle that is excellent in characteristics such as heat resistance. Patent Literature 10 can be listed as a literature which discloses a technique for producing an expanded polypropylene resin particle and a polypropylene resin expanded molded product both of which cause no frictional sound. Patent Literature 11 can be listed as a literature which discloses a technique for producing an expanded polypropylene resin particle and a polypropylene resin expanded molded product both of which enables improvement in low-temperature impact resistance. Patent Literature 12 can be listed as a literature which discloses a technique for producing a molded product from in-mold expanded particles which molded product is excellent in foamability, moldability, rigidity, heat resistance, and secondary workability.

However, even though an increase in molding temperature can be prevented with these techniques, these techniques still pose a problem that compressive strength becomes too low in comparison with conventional in-mold expanded molded products. Specifically, for example, in a case where a polypropylene resin in-mold expanded molded product for an automobile bumper has a density of 30 g/L, a strength of approximately 0.23 MPa is required as compressive strength when the polypropylene resin in-mold expanded molded product is strained by 50% (hereinafter referred to as "50%-strained compressive strength"). With conventional technologies, a pressure of 0.24 MPa (gage pressure) or more (i.e. high molding temperature) as in-mold foaming molding pressure is necessary in order to obtain polypropylene resin in-mold expanded molded product having the strength above.

Meanwhile, in a case where (i) a low-melting polypropylene resin is used, (ii) a mixture of a low-melting polypropylene resin and a high-melting polypropylene resin is used, or (iii) a metallocene polypropylene resin, which is polymerized by use of a metallocene catalyst, is used, an in-mold expanded molded product can be molded at an in-mold foaming molding pressure of 0.20 MPa (gage pressure) or less. However, a 50%-strained compressive strength becomes considerably below 0.23 MPa.

A metallocene polypropylene resin poses a problem of high production costs in comparison with a Ziegler polypropylene resin which is polymerized with the use of a Ziegler catalyst. Therefore, even if utility costs of in-mold foaming molding can be reduced as a result of a low molding temperature, material costs are still high. This is not necessarily advantageous from an industrial perspective.

Under the circumstances, there are still demands for a technique related to a high-compressive-strength polypropylene resin in-mold expanded molded product while a molding temperature during in-mold foaming molding is decreased.

Citation List

[Patent Literature]

[Patent Literature 1]
PCT International Publication, No. WO2008/139822 (Publication date: November 20, 2008)
[Patent Literature 2]
PCT International Publication, No. WO2009/001626 (Publication date: December 31, 2008)
[Patent Literature 3]
Japanese Patent Application Publication Tokukai No. 2009-144096 (Publication date: July 2, 2009)
[Patent Literature 4]
Japanese Patent Application Publication Tokukai No. 2010-144078 (Publication date: July 1, 2010)
[Patent Literature 5]
Chinese Patent Publication, No. CN103509203
[Patent Literature 6]
PCT International Publication, No. WO2006/054727 (Publication date: May 26, 2006)
[Patent Literature 7]
PCT International Publication, No. WO2009/051035 (Publication date: April 23, 2009)
[Patent Literature 8]
Japanese Patent Application Publication Tokukai No. 2008-106150 (Publication date: May 8, 2008)
[Patent Literature 9]
Japanese Patent Application Publication Tokukai No. 2006-096805 (Publication date: April 13, 2006)
[Patent Literature 10]
Japanese Patent Application Publication Tokukai No. 2008-255286 (Publication date: October 23, 2008)
[Patent Literature 11]
Japanese Patent Application Publication Tokukai No. 2014-173012 (Publication date: September 22, 2014)
[Patent Literature 12]
Japanese Patent Application Publication Tokukaihei No. 10-251437 (Publication date: September 22, 1998)
[Patent Literature 13]
EP 1 829 919 A1 (Publication date: September 5, 2007)

Summary of Invention

Technical Problem

It is an object of the present invention to obtain expanded polypropylene resin particles from which a polypropylene resin in-mold expanded molded product having a high compressive strength and an excellent appearance can be obtained at a decreased molding temperature (steam pressure) during in-mold foaming molding.

Solution to Problem

In order to attain the object, the inventor of the present invention carried out diligent research. As a result, the inventor of the present invention found that with the use of expanded polypropylene resin particles obtained from a base material resin containing a specific low-melting polypropylene resin A, a polypropylene resin B having a melting point higher than the low-melting polypropylene resin A, and a polyethylene resin C having a specific melting point, it is possible to (i) reduce a molding temperature during in-mold foaming molding to a low temperature and (ii) obtain a polypropylene resin in-mold expanded molded product which maintains a compressive strength at a level not inferior to those of conventional molded products and has an excellent appearance. The inventor of the present invention thus attained the present invention.
The present invention can be described as follows.

[1] An expanded polypropylene resin particle including: a polypropylene resin composition X which serves as a base material resin, the polypropylene resin composition X including: a polypropylene resin A having a melting point of 140°C or lower; a polypropylene resin B having a melting point of 145°C or higher; and a polyethylene resin C having a melting point of 120°C or higher to 135°C or lower, the polypropylene resin A accounting for 50 weight% or more to 75 weight% or less, the polypropylene resin B accounting for 25 weight% or more to 50 weight% or less, and the polyethylene resin C accounting for 1 weight% or more to 10 weight% or less, with respect to a total amount of the polypropylene resin A, the polypropylene resin B, and the polyethylene resin C as 100 weight%.

[2] The expanded polypropylene resin particle as set forth in [1], wherein the polypropylene resin A is a propylene-ethylene-1-butene random copolymer.

[3] The expanded polypropylene resin particle as set forth in [1] or [2], wherein the polypropylene resin B is a propylene-ethylene random copolymer or a propylene-ethylene-1-butene random copolymer.

[4] The expanded polypropylene resin particle as set forth in any one of [1] to [3], wherein the melting point of the polyethylene resin C is 125°C or higher to 135°C or lower.

[5] The expanded polypropylene resin particle as set forth in any one of [1] to [4], wherein a melting point of the polypropylene resin composition X is 140°C or higher to 150°C or lower.

[6] The expanded polypropylene resin particle as set forth in any one of [1] to [5], wherein the polypropylene resin A and the polypropylene resin B are Ziegler-Natta polypropylene resins.

[7] A polypropylene resin in-mold expanded molded product using expanded polypropylene resin particles recited in any one of [1] to [6].

[8] The polypropylene resin in-mold expanded molded product as set forth in [7], wherein the polypropylene resin in-mold expanded molded product has a density and a 50%-strained compressive strength which are related so as to satisfy the following Formula (1): [50%-strained compressive strength (MPa)] $\geq 0.0069 \times$ [Molded product density (g/L)] + 0.018 ... (1)

[9] A method of producing expanded polypropylene resin particles, comprising the step of: obtaining expanded polypropylene resin particles by (i) placing polypropylene resin particles, water, and an inorganic gas foaming agent in a pressure-resistant container, so that a mixture is obtained, the polypropylene resin particles including: a polypropylene resin composition X which serves as a base material resin, the polypropylene resin composition X including: 50 weight% or more to 75 weight% or less of a polypropylene resin A having a melting point of 140°C or lower; 25 weight% or more to 50 weight% or less of a polypropylene resin B having a melting point of 145°C or higher; and 1 weight% or more to 10 weight% or less of a polyethylene resin C having a melting point of 120°C or higher to 135°C or lower, the polypropylene resin A, the polypropylene resin B, and the polyethylene resin C accounting for 100 weight% in total, (ii) dispersing the polypropylene resin particles and the inorganic gas foaming agent in the water while the polypropylene resin particles and the inorganic gas foaming agent are stirred, so that a dispersion liquid is obtained, (iii) increasing a temperature and a pressure in the pressure-resistant container, and then (iv) releasing the dispersion liquid in the pressure-resistant container into a region having a pressure lower than an internal pressure of the pressure-resistant container, so that the polypropylene resin particles are foamed.

[10] The method as set forth in [9], wherein the polypropylene resin A is a propylene-ethylene-1-butene random copolymer.

[11] The method as set forth in [9] or [10], wherein the polypropylene resin B is a propylene-ethylene random copolymer or a propylene-ethylene-1-butene random copolymer.

[12] The method as set forth in any one of [9] to [11], wherein the melting point of the polyethylene resin C is 125°C or higher to 135°C or lower.

[13] The method as set forth in any one of [9] to [12], wherein a melting point of the polypropylene resin composition X is 140°C or higher to 150°C or lower.

[14] The method as set forth in any one of [9] to [13], wherein the polypropylene resin A and the polypropylene resin B are Ziegler-Natta polypropylene resins. Advantageous Effects of Invention

With an expanded polypropylene resin particle in accordance with the present invention, it is possible to (i) reduce a molding temperature during in-mold foaming molding to a low temperature and (ii) obtain a polypropylene resin in-mold expanded molded product which maintains a compressive strength at a level not inferior to those of conventional molded products and has an excellent appearance.

Brief Description of Drawings

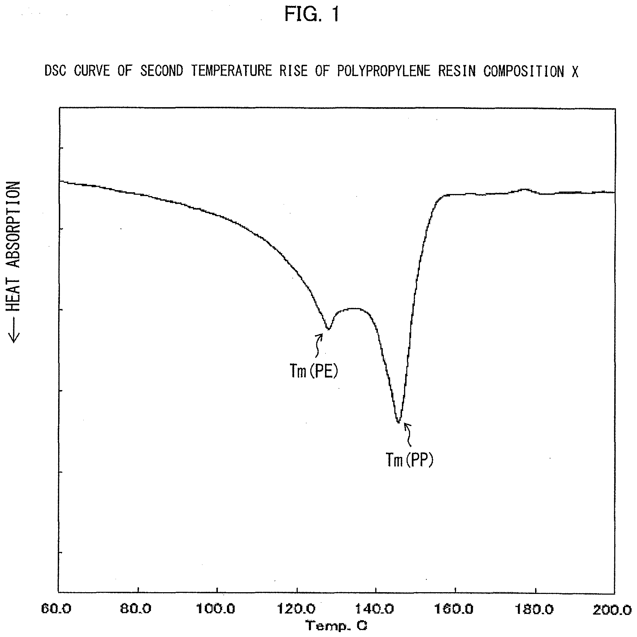

Fig. 1 is a view illustrating a DSC curve of second temperature rise obtained when, in differential scanning calorimetry (DSC), (i) a temperature of a polypropylene resin composition X in accordance with an embodiment of the present invention is raised from 40°C to 220°C at a heating rate of 10°C/min., (ii) the temperature is cooled from 220°C to 40°C at a rate of 10°C/min., and (iii) the temperature is raised again from 40°C to 220°C at a rate of 10°C/min.

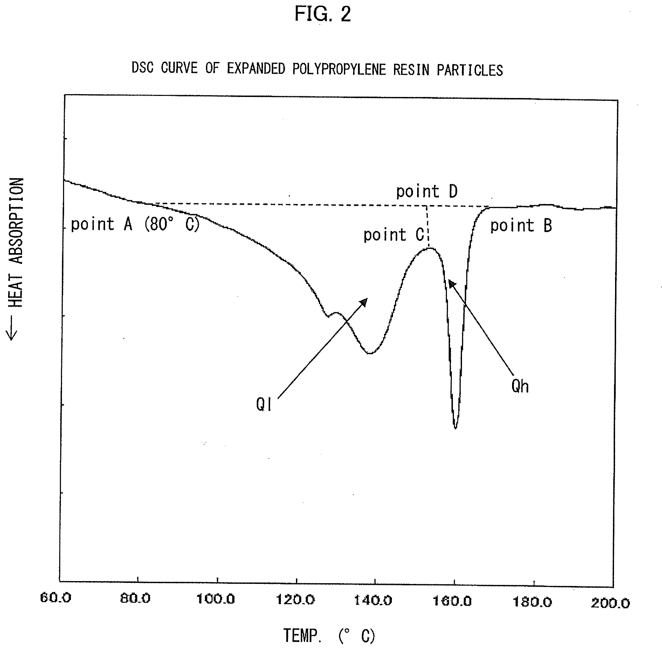

Fig. 2 is a view illustrating a DSC curve (temperature vs heat absorption quantity) obtained by a differential scanning calorimetry (DSC) in which a temperature of an expanded polypropylene resin particle in accordance with an embodiment of the present invention is raised from 40°C to 220°C at a heating rate of 10°C/min. The DSC curve shows two melting peaks and two melting heat quantity regions. The two melting heat quantity regions are a low temperature-side melting heat quantity region Q1 and a high temperature-side melting heat quantity region Qh.

Description of Embodiments

In the present invention, each of expanded polypropylene resin particles is obtained from a polypropylene resin composition X containing a polypropylene resin A, a polypropylene resin B, and a polyethylene resin C.
The polypropylene resin A used in the present invention is a polypropylene resin which has a melting point of 140°C or lower.
The polypropylene resin A used in an embodiment of the present invention preferably has a structural unit(s) of 1-butene in an amount of 2 weight% or more to 15 weight% or less with respect to 100 weight% entire structural units. If a structural unit of 1-butene is less than 2 weight%, then a molding temperature during in-mold foaming molding tends not to decrease. If a structural unit of 1-butene is more than 15 weight%, then a compressive strength of an in-mold expanded molded product to be obtained tends to decrease.
The polypropylene resin A used in an embodiment of the present invention can contain, in addition to 1-butene, a structural unit of a comonomer which is copolymerizable with propylene. Examples of the comonomer encompass at least one type of α-olefin, such as ethylene, 1-pentene, 1-hexene, and 4-methyl-1-butene, any of which has 2 carbon atoms or any of 4 carbon atoms through 12 carbon atoms. Among these, the comonomer is preferably ethylene.
The polypropylene resin A used in an embodiment of the present invention is preferably, in regard to ethylene, such that a structural unit of ethylene is present in amount of 2 weight% or more to 10 weight% or less with respect to 100 weight% entire structural units. The polypropylene resin A used in an embodiment of the present invention preferably satisfies the above conditions, because, with such a polypropylene resin A, (i) a molding temperature during in-mold foaming molding can be easily made low and (ii) compressive strength of an in-mold expanded molded product to be obtained does not decrease but can be kept high. Note that "100 weight% entire structural units" means that the sum of a structural unit obtained from propylene, a structural unit obtained from 1-butene, and a structural unit obtained from another/other comonomer(s) such as ethylene accounts for 100 weight%.
For the above reason, the polypropylene resin A is preferably at least one selected from the group consisting of (i) a propylene-1-butene random copolymer and (ii) a propylene-ethylene-1-butene random copolymer.
The polypropylene resin A used in the present invention has a melting point of 140°C or lower, preferably 130°C or higher to 140°C or lower, and more preferably 132°C or higher to 138°C or lower. If the melting point of the polypropylene resin A is more than 140°C, then a molding temperature during in-mold foaming molding tends not to decrease. If the melting point of the polypropylene resin A is lower than 130°C, then compressive strength of an in-mold expanded molded product to be obtained tends to decrease.
A catalyst for use in polymerization of the polypropylene resin A in accordance with an embodiment of the present invention is not limited to any particular one. Examples of the catalyst encompass a Ziegler catalyst (more specifically, a Ziegler-Natta catalyst) and metallocene catalyst.
In general, in comparison with a polypropylene resin polymerized with the use of a metallocene catalyst, a polypropylene resin polymerized with the use of a Ziegler catalyst has lower rigidity by melting point matching. Specifically, a comparison of rigidity of a Ziegler polypropylene resin and rigidity of a metallocene polypropylene resin having an identical melting point shows that the rigidity of the Ziegler polypropylene resin is lower. Therefore, the use of a polypropylene resin polymerized with the use of a Ziegler catalyst may generally be disadvantageous in order to obtain such advantageous effects of the present invention as (i) reducing a molding temperature during in-mold foaming molding to a low temperature and (ii) maintaining compressive strength of a polypropylene resin in-mold expanded molded product to be obtained. However, with the present invention, it is possible to easily obtain the advantageous effects of the present invention even in a case where a polypropylene resin polymerized with the use of a Ziegler catalyst is used. That is, it is more preferable in an embodiment of the present invention to use a polypropylene resin A which is polymerized with the use of a Ziegler catalyst. A polypropylene resin polymerized with the use of a Ziegler catalyst is also preferable in view of the fact that (i) such a polypropylene resin is industrially more available than a polypropylene resin polymerized with the use of a metallocene catalyst and (ii) such a polypropylene resin can be put to a wider range of use. Although usable also as a polypropylene resin B described later, a polypropylene resin polymerized with the use of a Ziegler catalyst brings about the advantageous effects of the present invention more remarkably in an embodiment of the present invention by being used as a polypropylene resin A.
The polypropylene resin B used in the present invention is a polypropylene resin which has a melting point of 145°C or higher.
Examples of the polypropylene resin B used in the present invention encompass (i) a propylene homopolymer and (ii) a copolymer including: propylene; and a comonomer which is copolymerizable with propylene.
The polypropylene resin B in accordance with an embodiment of the present invention is preferably a copolymer including propylene and a comonomer copolymerizable with the propylene in view of the fact that such a polypropylene resin B allows a molding temperature during in-mold foaming molding to be easily made low. Examples of such a comonomer which is copolymerizable with propylene encompass α-olefin, such as ethylene, 1-butene, 1-pentene, 1-hexene, and 4-methyl-1-butene, any of which has 2 carbon atoms or any of 4 carbon atoms through 12 carbon atoms. Among these, ethylene is preferable. These comonomers can be individually copolymerized with propylene, or these comonomers in combination can be copolymerized with propylene.

The polypropylene resin B in accordance with an embodiment of the present invention is preferably a propylene-ethylene random copolymer or a propylene-ethylene-1-butene random copolymer in view of the fact that such a polypropylene resin B allows a molding temperature during in-mold foaming molding to be easily made low and makes it possible to maintain high compressive strength of an in-mold expanded molded product to be obtained without causing the compressive strength to decrease.

A melting point of the polypropylene resin B in accordance with the present invention is 145°C or higher, preferably 145°C or higher to 160°C or lower, and more preferably 147°C or higher to 158°C or lower. If the melting point of the polypropylene resin B is lower than 145°C, then compressive strength of an in-mold expanded molded product to be obtained tends to decrease. If the melting point is more than 160°C, then a molding temperature during in-mold foaming molding tends to be high.

A catalyst for use in polymerization of the polypropylene resin B is not limited to any particular one. Examples of the catalyst encompass a Ziegler catalyst (more specifically, a Ziegler-Natta catalyst) and metallocene catalyst. Note, however, that a polypropylene resin B polymerized with the use of a Ziegler catalyst is preferable in view of the fact that such as polypropylene resin B is easily available industrially and can be put to a wider range of use.

A melt flow rate (hereinafter referred to as "MFR") of each of the polypropylene resin A and the polypropylene resin B used in an embodiment of the present invention is not particularly limited, but is preferably more than 3 g/10 min. to less than 10 g/10 min., and more preferably 5 g/10 min. or more to 9 g/10 min. or less. If the MFR of the polypropylene resin A or the polypropylene resin B is more than 3 g/10 min. to less than 10 g/10 min., then (i) an in-mold expanded molded product tends to have a good surface appearance and (ii) a molding cycle during molding tends to be short. Note that the MFR of each of the polypropylene resin A and the polypropylene resin B in accordance with an embodiment of the present invention is measured with the use of an MFR measuring instrument described in JIS-K7210 and under conditions involving (i) an orifice having a diameter of $2.0959 \pm 0.005$ mm and a length of $8.000 \pm 0.025$ mm, (ii) a load of 2160 g, and (iii) a temperature of $230°C \pm 0.2°C$.

In the present invention, a polyethylene resin C is used with the aim of allowing a molding temperature to be easily made low and enhancing the appearance of a molded product.

A melting point of the polyethylene resin C in accordance with the present invention is 120°C or higher to 135°C or lower, preferably 125°C or higher to 135°C or lower, more preferably 122°C or higher to 134°C or lower, and even more preferably 125°C or higher to 133°C or lower. If the melting point of the polyethylene resin C is lower than 120°C, then compressive strength of an in-mold expanded molded product to be obtained tends to decrease. If the melting point is more than 135°C, then a molded product tends to have a poor appearance.

The polyethylene resin C in accordance with an embodiment of the present invention is preferably a high-density polyethylene resin having a density of 0.95 g/cm$^3$ or more in view of the fact that the polyethylene resin C can prevent a decrease in compressive strength. Further, the polyethylene resin C in accordance with an embodiment of the present invention is preferably a polyethylene resin having a high molecular weight rather than polyethylene wax having a low molecular weight.

The MFR of the polyethylene resin C used in an embodiment of the present invention is not particularly limited, but is preferably 0.1 g/10 min. or more to 10 g/10 min. or less, and more preferably 0.5 g/10 min. or more to 9 g/10 min. or less. If the MFR of the polyethylene resin C is 0.1 g/10 min. or more to 10 g/10 min. or less, then an in-mold expanded molded product tends to have a good surface appearance. Note that the MFR of the polyethylene resin C in accordance with an embodiment of the present invention is measured with the use of an MFR measuring instrument described in JIS-K7210 and under conditions involving (i) an orifice having a diameter of $2.0959 \pm 0.005$ mm and a length of $8.000 \pm 0.025$ mm, (ii) a load of 2160 g, and (iii) a temperature of $190°C \pm 0.2°C$.

In the present invention, in view of allowing a molding temperature during in-mold foaming molding to be easily made low and maintaining high compressive strength of an in-mold expanded molded product to be obtained without causing the compressive strength to decrease, a ratio at which the constituent elements of the polypropylene resin composition X, i.e., the polypropylene resin A, the polypropylene resin B, and the polyethylene resin C, are mixed is such that the polypropylene resin A accounts for 50 weight% or more to 75 weight% or less, the polypropylene resin B accounts for 25 weight% or more to 50 weight% or less, and the polyethylene resin C accounts for 1 weight% or more to 10 weight% or less in a case where a total amount of the polypropylene resin A, the polypropylene resin B, and the polyethylene resin C is 100 weight%. The ratio is more preferably such that the polypropylene resin A accounts for 55 weight% or more to 70 weight% or less, the polypropylene resin B accounts for 30 weight% or more to 45 weight% or less, and the polyethylene resin C accounts for 2 weight% or more to 9 weight% or less in a case where a total amount of the polypropylene resin A, the polypropylene resin B, and the polyethylene resin C is 100 weight%. In a case where the polypropylene resin A accounts for less than 50 weight%, a molding temperature tends to increase. In a case where the polypropylene resin A accounts for more than 75 weight%, a high compressive strength tends not to be maintained. In a case where the polypropylene resin B accounts for less than 25 weight%, a high compressive strength tends not to be maintained. In a case where the polypropylene resin B accounts for more than 50 weight%, a molding temperature tends to increase. In a case where the polyethylene resin C accounts for less than 1 weight%, the effect of decreasing a temperature of a molded product and the effect of improving an appearance of a molded product tend not to be obtained. In a case where the polyethylene resin C accounts for more than 10 weight%, a high compressive strength tends not to be maintained.

In an embodiment of the present invention, it is possible to use an additive as necessary in addition to the polypropylene resin A, the polypropylene resin B, and the polyethylene resin C. Examples of the additive encompass: a resin other than a polypropylene resin and a polyethylene resin; an expansion nucleating agent; a hydrophilic compound; a colorant; an antistatic agent; a flame retarder; an antioxidant; and electrically conductive agent. In such a case, a base material resin can be constituted by a mixture of the polypropylene resin A, the polypropylene resin B, the polyethylene resin C, and the additive.

In an embodiment of the present invention, it is preferable to add, to a base material resin, an expansion nucleating agent which is to become an expansion nucleus during expansion.

Specific examples of the expansion nucleating agent for use in an embodiment of the present invention encompass silica (silicon dioxide), silicate, alumina, diatomaceous earth, calcium carbonate, magnesium carbonate, calcium phosphate, feldspar, apatite, and barium sulfate. Examples of silicate encompass talc, magnesium silicate, kaolin, halloysite, dickite, aluminum silicate, and zeolite. These expansion nucleating agents can be used individually or in combination.

In view of uniformity of cell diameters, an amount of the expansion nucleating agent contained in accordance with an embodiment of the present invention is preferably equal to or greater than 0.005 parts by weight and equal to or less than 2 parts by weight, more preferably equal to or greater than 0.01 parts by weight and equal to or less than 1 part by weight, and even more preferably equal to or greater than 0.03 parts by weight and equal to or less than 0.5 parts by weight with respect to 100 parts by weight of the polypropylene resin A, the polypropylene resin B, and the polyethylene resin C combined.

In an embodiment of the present invention, adding a hydrophilic compound to a base material resin brings about the effect of promoting an increase in expansion ratio of expanded polypropylene resin particles, and is therefore preferable.

Specific examples of a hydrophilic compound for use in an embodiment of the present invention encompass water-absorbing organic matters such as glycerin, polyethylene glycol, glycerin fatty acid ester, melamine, isocyanuric acid, and a melamine-isocyanuric acid condensate. These hydrophilic compounds can be used individually or in combination.

An amount of the hydrophilic compound contained in accordance with an embodiment of the present invention is preferably equal to or greater than 0.01 parts by weight and equal to or less than 5 parts by weight, and more preferably equal to or greater than 0.1 parts by weight and equal to or less than 2 parts by weight with respect to 100 parts by weight of the polypropylene resin A, the polypropylene resin B, and the polyethylene resin C combined. If the amount of the hydrophilic compound contained is less than 0.01 parts by weight, then the effect of increasing an expansion ratio and the effect of enlarging a cell diameter are difficult to be obtained. If the amount of the hydrophilic compound contained is more than 5 parts by weight, then the hydrophilic compound becomes unlikely to be uniformly dispersed in a polypropylene resin.

Examples of the colorant for use in an embodiment of the present invention encompass carbon black, ultramarine blue, cyanine pigment, azo pigment, quinacridone pigment cadmium yellow, chrome oxide, iron oxide, perylene pigment, and Anthraquinone pigment. These colorants can be used individually or in combination.

An amount of the colorant contained in accordance with an embodiment of the present invention is preferably equal to or greater than 0.001 parts by weight and equal to or less than 10 parts by weight, and more preferably equal to or greater than 0.01 parts by weight and equal to or less than 8 parts by weight with respect to 100 parts by weight of the polypropylene resin A, the polypropylene resin B, and the polyethylene resin C combined. In a case where blackening is intended with the use of carbon black, in particular, the carbon black is preferably equal to or greater than 1 part by weight and equal to or less than 10 parts by weight with respect to 100 parts by weight of the polypropylene resin A, the polypropylene resin B, and the polyethylene resin C combined.

Note that, a melting point of a polypropylene resin (specifically, polypropylene resin A, polypropylene resin B, or polypropylene resin composition X) or a polyethylene resin (specifically, polyethylene resin C) is a melting peak temperature in a second temperature rise in a DSC curve which is obtained when, in differential scanning calorimetry (DSC), 1 mg or more to 10 mg or less of polypropylene resin or polyethylene resin is (i) heated from 40°C to 220°C at a heating rate of 10°C/min., (ii) cooled from 220°C to 40°C at a cooling rate of 10°C/min., and then (iii) heated again from 40°C to 220°C at a heating rate of 10°C/min.

For the polypropylene resin composition X in accordance with an embodiment of the present invention, not only a single melting maximum peak Tm (PP) based on the polypropylene resin A and the polypropylene resin B but also a melting peak (or shoulder) Tm (PE) based on the polyethylene resin C appear around, for example, 130°C, as illustrated in 1. That is, the total of two melting peaks appear.

In an embodiment of the present invention, a melting point of the polypropylene resin composition X is obtained from (i) a melting point of approximately 135°C or higher to 155°C or lower, based on the respective melting points of the polypropylene resin A and the polypropylene resin B, and (ii) a melting point of approximately 120°C or higher to 135°C or lower, based on the melting point of the polyethylene resin C. In view of allowing a molding temperature during in-mold foaming molding to be easily made low and maintaining high compressive strength of an in-mold expanded molded product to be obtained without causing the compressive strength to decrease, the melting maximum peak point Tm (PP) based on the respective melting points of the polypropylene resin A and the polypropylene resin B is preferably 140°C or higher to 150°C or lower, more preferably 141°C or higher to 149°C or lower, and even more preferably 142°C or higher to 148°C or lower. Note that the "melting point of the polypropylene resin composition X" herein means the melting point Tm (PP).

In an embodiment of the present invention, examples of a method of mixing the polypropylene resin A, the polypropylene resin B, and the polyethylene resin C to form the polypropylene resin composition X encompass (i) a method in which the polypropylene resin A, the polypropylene resin B, and the polyethylene resin C are mixed with the use of, for example, a blender or an extruder and (ii) a method in which the polypropylene resin A, the polypropylene resin B, and the polyethylene resin C are blended by multi-stage polymerization during polymerization.

Note that the method in which, for example, a blender or an extruder is used can also be used as a method of mixing the aforementioned additive in the polypropylene resin composition X. Note also that the aforementioned additive can be directly added. Alternatively, it is possible to (i) prepare a masterbatch by including, at a high concentration, the additive in another resin and then (ii) add the masterbatch as a masterbatch resin.

A resin to be used for production of the masterbatch resin is preferably a polyolefin resin, more preferably the polypropylene resin A and/or the polypropylene resin B, and most preferably a mixture of the polypropylene resin A and the polypropylene resin B.

In production of expanded polypropylene resin particles in accordance with an embodiment of the present invention, a method (granulation step) of producing polypropylene resin particles, which are made of a base material resin, can be first carried out.

Examples of the method of producing polypropylene resin particles encompass a method in which an extruder is used. Specifically, it is possible, for example, that (i) a polypropylene resin A, a polypropylene resin B, a polyethylene resin C, and, as necessary, an additive such as another resin, an expansion nucleating agent, a hydrophilic compound, and a colorant are blended, so that a blended product is obtained, (ii) the blended product is introduced into an extruder and is melted and kneaded, (iii) a resultant product is extruded through a die provided at a tip of the extruder, and is then allowed to pass through water so as to be cooled, and (iv) the resultant product is chopped with the use of a cutter, so that a desired particle shape such as a columnar shape, an ellipsoidal shape, a spherical shape, a cubic shape, and a rectangular parallelepiped shape can be obtained. Alternatively, it is possible to (i) directly extrude the blended product through the die into water, and immediately cut the resultant product into a particle shape, so that particles are obtained, and then (ii) cool the particles. By thus melting and kneading the resins, the resins are made into a more uniform base material resin. Alternatively, it is possible to (i) introduce the polypropylene resin A, the polypropylene resin B, and the polyethylene resin C into an extruder, (ii) as necessary, feed an additive such as an expansion nucleating agent, a hydrophilic compound, and a colorant from a middle part of the extruder so as to be mixed in the extruder, and (iii) melt and knead a resultant mixture in the extruder.

A weight of each of the polypropylene resin particles thus obtained is preferably 0.2 mg per particle or more to 10 mg per particle or less, and more preferably 0.5 mg per particle or more to 5 mg per particle or less. If the weight of each of the polypropylene resin particles is less than 0.2 mg per particle, then handleability tends to decrease. If the weight is more than 10 mg per particle, then a mold-filling property during an in-mold foaming molding step tends to decrease.

Expanded polypropylene resin particles in accordance with an embodiment of the present invention can be produced with the use of polypropylene resin particles thus obtained.

A method of producing the expanded polypropylene resin particles in accordance with the present invention encompass a method of producing expanded polypropylene resin particles in an aqueous dispersion system by carrying out the following foaming step: (i) a dispersion liquid obtained by dispersing polypropylene resin particles along with a inorganic gas foaming agent such as carbon dioxide into an aqueous dispersion medium is placed in a pressure-resistant container, (ii) the dispersion liquid is heated to a temperature equal to or higher than a softening temperature of the polypropylene resin particles and is subjected to pressure, (iii) the temperature and the pressure are retained for a certain period of time, and (iv) the dispersion liquid is released to a region having a pressure lower than an internal pressure of the pressure-resistant container, so that the expanded polypropylene resin particles are obtained.

Specifically,

(1) Polypropylene resin particles, an aqueous dispersion medium, and, as necessary, a dispersing agent, for example, are placed into the pressure-resistant container. Then, while a resultant dispersion liquid is stirred, the inside of the pressure-resistant container is vacuumed as necessary. Then, a foaming agent having a pressure of 1 MPa (gage pressure) or more to 2 MPa (gage pressure) or less is introduced into the pressure-resistant container, and then the dispersion liquid is heated to a temperature equal to or higher than the softening temperature of the polypropylene resin. By the heating, the internal pressure of the pressure-resistant container rises to approximately 2 MPa (gage pressure) or more to 5 MPa (gage pressure) or less. If necessary, a foaming agent is further added to the inside of the pressure-resistant container around a foaming temperature to adjust a foaming pressure to a desired pressure. Then, a temperature is further adjusted. Thereafter, the adjusted temperature and the adjusted pressure are retained for a certain period of time. Subsequently, the dispersion liquid is released into a region having a pressure lower than the internal pressure of the pressure-resistant container, so that the expanded polypropylene resin particles are obtained.

As another aspect, the following aspect is possible:
(2) Polypropylene resin particles, an aqueous dispersion medium, and, as necessary, a dispersing agent, for example, are placed into the pressure-resistant container. Then, while a resultant dispersion liquid is stirred, the inside of the pressure-resistant container is vacuumed as necessary. Then, while the dispersion liquid is heated to a temperature equal to or higher than the softening temperature of the polypropylene resin particles, a foaming agent is introduced into the pressure-resistant container. Then, the temperature in the pressure-resistant container is adjusted to a foaming temperature, the foaming temperature is retained for a certain period of time, and the dispersion liquid is released into a region having a pressure lower than the internal pressure of the pressure-resistant container, so that expanded polyolefin resin particles are obtained.

As yet another aspect, the following aspect is possible:
(3) Polypropylene resin particles, an aqueous dispersion medium, and, as necessary, a dispersing agent, for example, are placed into the pressure-resistant container. Then, while a resultant dispersion liquid is stirred, the dispersion liquid is heated to a temperature around a foaming temperature. Then, a foaming agent is further introduced into the pressure-resistant container, and a temperature in the pressure-resistant container is adjusted to a foaming temperature. Then, the foaming temperature is retained for a certain period of time. Then, the dispersion liquid in the pressure-resistant container is released into a region having a pressure lower than an internal pressure of the pressure-resistant container, so that expanded polyolefin resin particles are obtained.

Note that the expansion ratio can be adjusted by (i) adjusting a pressure-releasing speed during foaming by increasing the internal pressure of the pressure-resistant container through injecting carbon dioxide, nitrogen, air, or a substance used as a foaming agent, into the pressure-resistant container before the dispersion liquid is released into the low-pressure region and (ii) controlling the pressure through introducing carbon dioxide, nitrogen, air, or a substance used as a foaming agent, into the pressure-resistant container also while the dispersion liquid is being released into the low-pressure region.

In an embodiment of the present invention, the pressure-resistant container into which the polypropylene resin particles are dispersed is not limited to any particular one, provided that the pressure-resistant container is capable of resisting a pressure inside the container and a temperature inside the container during production of the expanded particles. Examples of the pressure-resistant container encompass an autoclave-type pressure-resistant container.

An aqueous dispersion medium for use in an embodiment of the present invention is preferably water. Alternatively, the aqueous dispersion medium can also be an aqueous dispersion medium obtained by adding methanol, ethanol, ethylene glycol, glycerin, or the like to water. In a case where the base material resin contains a hydrophilic compound in an embodiment of the present invention, water in the aqueous dispersion medium serves also as a foaming agent. This contributes to an increase in expansion ratio.

Examples of the foaming agent for use in an embodiment of the present invention encompass: saturated hydrocarbons such as propane, butane, and pentane; ethers such as dimethyl ether; alcohols such as methanol and ethanol; inorganic gas such as air, nitrogen, and carbon dioxide; and water. Among these foaming agents, inorganic gas and water have particularly small environmental impact and have no dangerous inflammability, and are therefore preferable. It is more preferable to use at least one foaming agent selected from the group consisting of carbon dioxide and water.

In an embodiment of the present invention, it is preferable to use a dispersing agent or/and a dispersion auxiliary agent in order to prevent polypropylene resin particles in an aqueous dispersion medium from adhering to each other.

Examples of the dispersing agent encompass inorganic dispersion agents such as tertiary calcium phosphate, tertiary magnesium phosphate, basic magnesium carbonate, calcium carbonate, barium sulfate, kaolin, talc, and clay. These inorganic dispersion agents can be used individually, or two or more of these inorganic dispersion agents can be used in combination.

Examples of the dispersion auxiliary agent encompass: (i) anionic surfactants of carboxylate type, (ii) anionic surfactants of sulfonate type such as alkylsulfonic acid salt, n-paraffin sulfonate salt, alkyl benzene sulfonate, alkyl naphthalene sulfonate, and sulfosuccinate, (iii) anionic surfactants of sulfate ester type such as sulfonated oil, alkyl sulfate salt, alkyl ether sulfate, and alkyl amide sulfate, and (iv) anionic surfactants of phosphate ester type such as alkyl phosphate, polyoxyethylene phosphate, and alkyl allyl ether sulfate. These dispersion auxiliary agents can be used individually or two or more of these dispersion auxiliary agents can be used in combination.

Of these, the following are preferably used in combination: (i) at least one dispersing agent selected from the group consisting of tertiary calcium phosphate, tertiary magnesium phosphate, barium sulfate, and kaolin; and (ii) a dispersion auxiliary agent which is n-paraffin sulfonic acid soda.

In an embodiment of the present invention, it is ordinarily preferable to use an aqueous dispersion medium in an amount of equal to or greater than 100 parts by weight and equal to or less than 500 parts by weight with respect to 100 parts by weight of polypropylene resin particles so that dispensability of the polypropylene resin particles in the aqueous dispersion medium is good. The respective amounts of dispersing agent and dispersion auxiliary agent vary, depending on (i) the types of the dispersing agent and the dispersion auxiliary agent and (ii) the type of and amount of polypropylene resin particles used. Ordinarily, with respect to 100 parts by weight of polypropylene resin particles, the dispersing agent is preferably used in an amount of 0.2 parts by weight or more to 3 parts by weight or less, and the dispersion auxiliary agent is preferably used in an amount of 0.001 parts by weight or more to 0.1 parts by weight or less.

The step of thus obtaining expanded polypropylene resin particles from polypropylene resin particles may be referred to as "first-stage foaming step", and the expanded polypropylene resin particles thus obtained may be referred to as "first-stage expanded particles".

An expansion ratio of first-stage expanded particles may not reach a predetermined expansion ratio, depending on foaming conditions such as foaming temperature, foaming pressure, and the type of foaming agent. In such a case, expanded polypropylene resin particles whose expansion ratio is increased in comparison with that of first-stage expanded particles can be obtained by (i) applying an internal pressure to the first-stage expanded particles by impregnation of inorganic gas (e.g. air, nitrogen, carbon dioxide) and then (ii) causing the first-stage expanded particles to come into contact with steam having a certain pressure.

The step of thus further foaming the expanded polypropylene resin particles so as to obtain expanded polypropylene resin particles having a high expansion ratio may be referred to as "second-stage foaming step". Expanded polypropylene resin particles thus obtained through the second-stage foaming step may be referred to as "second-stage expanded particles".

In an embodiment of the present invention, a pressure of steam in the second-stage foaming step is adjusted preferably 0.04 MPa (gage pressure) or more to 0.25 MPa (gage pressure) or less, and more preferably 0.05 MPa (gage pressure) or more to 0.15 MPa (gage pressure) or less, in view of the expansion ratio of the second-stage expanded particles.

If the pressure of steam in the second-stage foaming step is less than 0.04 MPa (gage pressure), then the expansion ratio is less likely to increase. If the pressure is more than 0.25 MPa (gage pressure), then second-stage expanded particles to be obtained tend to adhere to each other, so that it becomes impossible to use the second-stage expanded particles for subsequent in-mold foaming molding.

An internal pressure of air to be impregnated into the first-stage expanded particles is (i) desirably made to change as appropriate in view of (a) the expansion ratio of the second-stage expanded particles and (b) steam pressure in the second-stage foaming step and (ii) preferably 0.2 MPa or more (absolute pressure) to 0.6 MPa or less (absolute pressure).

If the internal pressure of air to be impregnated into the first-stage expanded particles is less than 0.2 MPa (absolute pressure), then steam having a high pressure is necessary to increase the expansion ratio, so that the second-stage expanded particles tend to adhere to each other. If the internal pressure of air to be impregnated into the first-stage expanded particles is more than 0.6 MPa (absolute pressure), then the second-stage expanded particles tend to become an open-cell foam. In such a case, rigidity, such as compressive strength, of an in-mold expanded molded product tends to decrease.

The expansion ratio of the expanded polypropylene resin particles in accordance with an embodiment of the present invention is not particularly limited, and is preferably 5 times or more to 60 times or less. If the expansion ratio of the expanded polypropylene resin particles is less than 5 times, then reductions in weight of a polypropylene resin in-mold expanded molded product tend to be insufficient. If the expansion ratio of the expanded polypropylene resin particles is more than 60 times, then mechanical strength of a polypropylene resin in-mold expanded molded product tend to be impractical.

An average cell diameter of the expanded polypropylene resin particles in accordance with an embodiment of the present invention is preferably 80 $\mu$m or more to 400 $\mu$m or less, and more preferably 85 $\mu$m or more to 360 $\mu$m or less, and even more preferably 90 $\mu$m or more to 330 $\mu$m or less. If the average cell diameter falls within these ranges, then the polypropylene resin in-mold expanded molded product tends to (i) have a good surface appearance and (ii) have a high compressive strength.

The average cell diameter of the expanded polypropylene resin particles can be controlled by adjusting the amount of an expansion nucleating agent to add. Alternatively, the average cell diameter can be controlled by, for example, adjusting a high-temperature heat quantity ratio described later. If the high-temperature heat quantity ratio is less than 15%, then the average cell diameter tends to become large. If the high-temperature heat quantity ratio is more than 50%, then the average cell diameter tends to become small.

In a DSC curve which is obtained by differential scanning calorimetry (DSC) in which a temperature of the expanded polypropylene resin particles is raised at a heating rate of 10°C/min., as illustrated in Fig. 2, expanded polypropylene resin particles in accordance with an embodiment of the present invention have (i) at least two melting peaks and (ii) at least two melting heat quantities of a low temperature-side melting heat quantity (Ql) and a high temperature-side melting heat quantity (Qh). As described earlier, in an embodiment of the present invention, not only the two melting peaks based on the polypropylene resins A and B but also a melting peak (or shoulder) based on the polyethylene resin C appear. That is, the total of three melting peaks appear (see Fig. 2).

Expanded polypropylene resin particles in accordance with an embodiment of the present invention can be easily obtained by, in the earlier-described method of producing expanded polypropylene resin particles in an aqueous dispersion system, (i) adjusting, as appropriate, a temperature in the pressure-resistant container during foaming to a proper value and (ii) retaining the temperature for a certain period of time. That is, in a case where a melting point of the polypropylene resin composition X based on melting points of the polypropylene resins A and B is Tm (PP) (°C), the temperature in the pressure-resistant container during foaming is preferably Tm (PP) - 8 (°C) or higher, more preferably Tm (PP) - 5 (°C) or higher to Tm (PP) + 4 (°C) or lower, and even more preferably Tm (PP) - 5 (°C) or higher to Tm (PP) + 3 (°C) or lower. A period of time during which the polypropylene resin particles are retained at the temperature in the pressure-resistant container during foaming is preferably 1 min. or more to 120 min. or less, and more preferably 5 min. or more to 60 min. or less.

In an embodiment of the present invention, an entire melting heat quantity (Q), a low temperature-side melting heat quantity (Ql), and a high temperature-side melting heat quantity (Qh) of expanded polypropylene resin particles are defined as follows by use of Fig. 2. In the DSC curve obtained (Fig. 2), the entire melting heat quantity (Q=Ql+Qh), which is the sum of the low temperature-side melting heat quantity (Ql) and the high temperature-side melting heat quantity (Qh), is indicated by a part surrounded by a (i) line segment A-B which is drawn so as to connect a heat absorption quantity (point A) at a temperature of 80°C and a heat absorption quantity (point B) at a temperature at which melting on a high temperature side ends and (ii) the DSC curve. The low temperature-side melting heat quantity (Ql) is indicated by a part surrounded by a line segment A-D, a line segment C-D, and the DSC curve, and the high temperature-side melting heat quantity (Qh) is indicated by a part surrounded by a line segment B-D, the line segment C-D, and the DSC curve where (i) a point C is a point at which a heat absorption quantity between two melting heat quantity regions in the DSC curve is the smallest, the two melting heat quantity regions being a region of the low temperature-side melting heat quantity and a region of the high temperature-side melting heat quantity and (ii) a point D is a point at which the line segment A-B intersects a line that is drawn so as to extend, parallel to a Y-axis, from the point C toward the line segment A-B.

The expanded polypropylene resin particles in accordance with an embodiment of the present invention has a ratio of the high temperature-side melting heat quantity (Qh) to the entire melting heat quantity [={Qh/(Ql+Qh)}×100(%)] (hereinafter also referred to as "high-temperature heat quantity ratio"), which ratio is preferably 15% or more to 50% or less, more preferably 17% or more to 40% or less, and even more preferably 20% or more to 35% or less. In a case where the high-temperature heat quantity ratio falls within these ranges, even if a molding temperature (steam pressure) during production of a polypropylene resin in-mold expanded molded product is low, it is still easy to obtain a polypropylene resin in-mold expanded molded product which (i) has a good surface appearance, (ii) has a high compressive strength, and (iii) has good fusibility.

The high-temperature heat quantity ratio of the expanded polypropylene resin particles can be adjusted as appropriate by, for example, (i) a retention time at the temperature in the pressure-resistant container (i.e. a retention time that (a) starts from a time point at which the polypropylene resin particles reach a desired temperature in the pressure-resistant container and (b) ends at time point at which the polypropylene resin particles foam, (ii) a foaming temperature (which is a temperature during foaming and which may or may not be identical to the temperature in the pressure-resistant container), and (iii) foaming pressure (pressure during foaming). In general, a high-temperature heat quantity ratio or a heat quantity at the high temperature-side melting peak tends to become large by extending a retention time, decreasing a foaming temperature, or/and decreasing foaming pressure. Because of these factors, conditions to obtain a desired high-temperature heat quantity ratio can be easily found by conducting several experiments in which a retention time, a foaming temperature, or/and a foaming pressure is systematically changed. Note that the foaming pressure can be adjusted by adjusting the amount of a foaming agent.

PCT International Publication No. WO2009/001626 discloses an expanded polypropylene resin particle which has such a crystal structure that a DSC curve, which is obtained in a first temperature rise when a temperature of an expanded polypropylene resin particle is raised from room temperature to 200°C at a heating rate of 2°C/min. in heat flux differential scanning calorimetry, shows (i) a main endothermic peak of 100°C to 140°C endothermic peak apex temperature exhibiting 70% to 95% endothermic peak heat quantity with respect to an entire endothermic peak heat quantity and (ii) two or more endothermic peaks appearing on a high-temperature side with respect to the main endothermic peak.

In terms used in PCT International Publication No. WO2009/001626, the expanded polypropylene resin particles in accordance with an embodiment of the present invention are not limited to any number of endothermic peaks on a high-temperature side with respect to a main endothermic peak in heat flux differential scanning calorimetry at a heating rate of 2°C/min., but preferably has such a crystal structure that one endothermic peak appears.

The expanded polypropylene resin particles having such a crystal structure that one endothermic peak appears can be easily obtained by use of a base material resin including (i) a polypropylene resin A having a melting point of 140°C or lower and (ii) a polypropylene resin B having a melting point higher than that of the polypropylene resin A by less than 25°C.

The expanded polypropylene resin particles having such a crystal structure that one endothermic peak appears is preferable because, with such expanded polypropylene resin particles, (i) compatibility between both resins (specifically, polypropylene resin A and polypropylene resin B) when melted and kneaded is good, (ii) a variance in cell diameter of expanded polypropylene resin particles becomes small, and (iii) an in-mold expanded molded product has a good surface appearance.

The expanded polypropylene resin particles in accordance with an embodiment of the present invention can be made into a polypropylene resin in-mold expanded molded product by a conventionally known in-mold foaming molding method.

Examples of an in-mold foaming molding method in accordance with an embodiment of the present invention encompass:

i) a method of (a) subjecting expanded polypropylene resin particles to a pressure treatment with the use of inorganic gas (e.g. air, nitrogen, carbon dioxide) so that the expanded polypropylene resin particles, into which the inorganic gas is impregnated, has a certain internal pressure and (b) filling a mold with the expanded polypropylene resin particles, and (c) heating the mold by steam so that the expanded polypropylene resin particles are fused to each other.

ii) a method of (a) compressing expanded polypropylene resin particles by gas pressure, (b) filling a mold with the expanded polypropylene resin particles, and (c) heating the mold by steam so that the expanded polypropylene resin particles are fused to each other by the effect of resilience of the expanded polypropylene resin particles.

iii) a method of (a) filling a mold with expanded polypropylene resin particles without any particular pretreatment and (b) heating the mold by steam so that the expanded polypropylene resin particles are fused to each other.

A molded product density of the polypropylene resin in-mold expanded molded product in accordance with an embodiment of the present invention is not limited to any particular density. However, a polypropylene resin in-mold expanded molded product having a molded product density of 10 g/L or more to 100 g/L or less is suitably used.

The polypropylene resin in-mold expanded molded product in accordance with an embodiment of the present invention is obtained as a high-compressive-strength polypropylene resin in-mold expanded molded product by subjecting expanded polypropylene resin particles to in-mold foaming molding while a molding temperature (steam pressure) is reduced. In particular, the polypropylene resin in-mold expanded molded product is preferable in that a relationship between a molded product density and a 50%-strained compressive strength of the polypropylene resin in-mold expanded molded product satisfies the following Formula (1):

$$[\text{50\%-strained compressive strength (MPa)}] \geq 0.0069 \times [\text{Molded product density (g/L)}] + 0.018 \ldots (1)$$

Specifically, polypropylene resin in-mold expanded molded products satisfying Formula (1) have conventionally been used as highly strong polypropylene resin in-mold expanded molded products for automobile interior materials and automobile bumper core materials. However, such conventional polypropylene resin in-mold expanded molded products require a high molding temperature during in-mold foaming molding. For example, during in-mold foaming molding in which steam is used, such a high steam pressure as 0.24 MPa (gage pressure) or more was necessary. However, with an embodiment of the present invention, it is possible to produce a polypropylene resin in-mold expanded molded product satisfying Formula (1) even with such a low steam pressure as 0.22 MPa (gage pressure) or less.

A polypropylene resin in-mold expanded molded product thus obtained can be put to various applications such as heat insulating materials, shock-absorbing packing materials, and returnable containers in addition to automobile interior materials and automobile bumper core materials.

In particular, the polypropylene resin in-mold expanded molded product in accordance with an embodiment of the present invention is preferably used for automobile materials such as automobile interior materials and automobile bumper core materials because such automobile materials obtained from the polypropylene resin in-mold expanded molded product, which can be molded with a lower molding temperature (steam pressure), exhibit a compressive strength similar to those obtained from conventional molded products molded with a high molding temperature (steam pressure).

Examples

The following description will discuss the present invention in more detail with Examples and Comparative Examples. Note, however, that the present invention is not limited to these Examples and Comparative Examples.

Substances used in Examples and Comparative Examples are as provided below.

(Polypropylene resin and polyethylene resin)

Table 1 shows polypropylene resins A-1 through A-3, polypropylene resins B-1 through B-3, and polyethylene resins C-1 through C-4 which were used.

[Table 1]

| | Type of catalyst | Comonomer content (weight%) | | Melting point (°C) | MFR (g/10 min.) |
|---|---|---|---|---|---|
| | | 1-butene | Ethylene | | |
| Polypropylene resin A-1 | Ziegler | 2.5 | 3.3 | 134 | 6.0 |
| Polypropylene resin A-2 | Ziegler | 7.2 | 4.5 | 138 | 8.0 |
| Polypropylene resin A-3 | Ziegler | 3.0 | 4.1 | 142 | 7.2 |
| Polypropylene resin B-1 | Ziegler | - | 2.8 | 153 | 8.5 |
| Polypropylene resin B-2 | Ziegler | - | 3.4 | 148 | 6.5 |
| Polypropylene resin B-3 | Ziegler | 2.2 | 3.6 | 143 | 7.0 |
| Polyethylene resin C-1 | - | - | - | 129 | 7.0 |
| Polyethylene resin C-2 | - | - | - | 123 | 2.1 |
| Polyethylene resin C-3 | - | - | - | 113 | 2.0 |
| Polyethylene resin C-4 | - | - | - | 136 | 0.3 |
| Polypropylene resins are random copolymers. | | | | | |

(Other additives)

• Talc: manufactured by Hayashi-Kasei Co., Ltd., Talcan Powder PK-S
• Polyethylene glycol: manufactured by Lion Corporation, PEG#300
• Carbon black: manufactured by Mitsubishi Chemical Corporation, MCF88 (average particle size: 18 nm)

In Examples and Comparative Examples, evaluations were made by the methods as below.

(Quantification of copolymer composition in polypropylene resin)

A polypropylene resin having a known comonomer content was hot pressed at 180°C, so that a film having a thickness of approximately 100 $\mu$m was produced. The film thus produced was subjected to IR spectrum measurement so that a propylene-derived absorbance (I810) at 810 cm$^{-1}$, an ethylene comonomer-derived absorbance (I733) at 733 cm$^{-1}$, and a butene comonomer-derived absorbance (I766) at 766 cm$^{-1}$ were read. Then, an absorbance ratio (I733/I810) is shown in a horizontal axis, and an ethylene comonomer content is shown in a vertical axis, so that a calibration curve indicative of the ethylene comonomer content was obtained. Likewise, an absorbance ratio (I766/I810) is shown in a horizontal axis, and a butene comonomer content is shown in a vertical axis, so that a calibration curve indicative of the butene comonomer content was obtained. Then, as with the method of preparing a sample during production of the calibration curves, (i) a polypropylene resin having an unknown comonomer content was hot pressed, so that a film having a thickness of approximately 100 $\mu$m was produced, (ii) I810, I733, and I766 were read by IR spectrum measurement, and (iii) an ethylene comonomer content and a butene comonomer content were calculated according to the calibration curves produced earlier.

(Measurement of melting point of polypropylene resin, polyethylene resin, and polypropylene resin composition)

A melting point tm of the polypropylene resin A, the polypropylene resin B, the polyethylene resin C, and the polypropylene resin composition X was measured with the use of a differential scanning calorimeter DSC (manufactured by Seiko Instruments Inc., model: DSC6200). Specifically, the melting point tm was found as a melting peak temperature in a second temperature rise on a DSC curve obtained by (i) raising a temperature of 5 mg to 6 mg of the polypropylene resin (polypropylene resin particles) from 40°C to 220°C at a heating rate of 10°C/min. so as to melt the polypropylene resin, (ii) lowering the temperature from 220°C to 40°C at a cooling rate of 10°C/min. so as to crystallize the polypropylene resin (polypropylene resin particles), and then (iii) raising the temperature again from 40°C to 220°C at a heating rate of 10°C/min.

(Expansion ratio of expanded polypropylene resin particles)

Approximately 3 g or more to 10 g or less of the expanded polypropylene resin particles obtained was used. Then, the expanded polypropylene resin particles were dried at 60°C for 6 hours, and were then subjected to conditioning indoors at 23°C and at a humidity of 50%. Then, after a weight w(g) of the expanded polypropylene resin particles was measured, a volume v(cm$^3$) of the expanded polypropylene resin particles was measured by an immersing the resultant particles, so that an absolute specific gravity ($\rho$b=w/v) of the expanded particles was obtained. Then, based on a ratio of the absolute specific gravity to a density ($\rho$r) of the polypropylene resin particles before foaming, an expansion ratio (K=$\rho$r/$\rho$b) was calculated. Note that in each of Examples and Comparative Examples, the density ($\rho$r) of the polypropylene resin particles before foaming was 0.9 g/cm$^3$.

(Average cell diameter of expanded polypropylene resin particle)

While caution was exercised so that a foam membrane (cell membrane) in an expanded polypropylene resin particle obtained would not be destroyed, the expanded particle was cut substantially through a center part, and then a cross section was observed with the use of a microscope (manufactured by Keyence Corporation: VHX digital microscope). A line segment, a length of which corresponds to 1000 $\mu$m, was drawn on an entire portion of a photograph captured by the microscope for observation except a portion of a surface layer of the expanded particle. Then, the number (n) of cells on which the line segment passes was counted, so that a cell diameter was calculated in 1000/n ($\mu$m). Such operations were carried out for 10 expanded particles, and an average value of respective cell diameters of cells calculated in the 10 operations was regarded as an average cell diameter of the expanded polypropylene resin particles.

(Calculation of high-temperature heat quantity ratio of expanded polypropylene resin particles)

A high-temperature heat quantity ratio [=$\{Qh/(Ql+Qh)\}\times100(\%)$] was calculated based on a DSC curve in a first temperature rise (see Fig. 2) which was obtained with the use of a differential scanning calorimeter (manufactured by Seiko Instruments Inc., model: DSC6200) by raising a temperature of 5 mg to 6 mg of the expanded polypropylene resin particles from 40°C to 220°C at a heating rate of 10°C/min. In the DSC obtained illustrated in Fig. 2, an entire melting heat quantity (Q=Ql+Qh), which is the sum of a low temperature-side melting heat quantity (Ql) and a high temperature-side melting heat quantity (Qh), is indicated by a part surrounded by a (i) line segment A-B which is drawn so as to connect a heat absorption quantity (point A) at a temperature of 80°C and a heat absorption quantity (point B) at a temperature at which melting on a high temperature side ends and (ii) the DSC curve. The low temperature-side melting heat quantity (Ql) is indicated by a part surrounded by a line segment A-D, a line segment C-D, and the DSC curve, and the high temperature-side melting heat quantity (Qh) is indicated by a part surrounded by a line segment B-D, the line segment C-D, and the DSC curve where (i) a point C is a point at which a heat absorption quantity between two melting heat quantity regions in the DSC curve is the smallest, the two melting heat quantity regions being a region of the low temperature-side melting heat quantity and a region of the high temperature-side melting heat quantity and (ii) a point D is a point at which the line segment A-B intersects a line that is drawn so as to extend, parallel to a Y-axis, from the point C toward the line segment A-B.

(DSC measurement of expanded polypropylene resin particles at heating rate of 2°C/min.)

DSC measurement was carried out with the use of a differential scanning calorimeter (manufactured by Seiko Instruments Inc., model: DSC6200) by raising a temperature of 1 mg to 3 mg of expanded polypropylene resin particles from 40°C to 200°C at a heating rate of 2°C/min.

(Moldability evaluation)

With the use of a polyolefin molding machine (manufactured by DAISEN Co., Ltd., KD-345), (i) a mold, which allows a plate-like in-mold expanded molded product having a size of length 300 mm × width 400 mm × thickness 50 mm to be obtained, was filled with expanded particles while cracking was 5 mm, which expanded particles had been prepared in advance so that expanded polypropylene resin particles would have an internal air pressure as shown in Table 2 or 3 and (ii) the expanded particles were heat molded by being compressed by 10% in thicknesswise directions. This resulted in a plate-like polypropylene resin in-mold expanded molded product having a size of length 300 mm × width 400 mm × thickness 50 mm. In so doing, after the mold was filled with the expanded polypropylene resin particles and the mold was then completely closed, air in the mold was purged by use of steam having a pressure of 0.1 MPa (gage pressure) (preheating step), the expanded polypropylene resin particles were heat molded for 10 sec. by use of heating steam having a certain molding pressure (both-surface heating step). This resulted in an in-mold expanded molded product. The polypropylene resin in-mold expanded molded product obtained was (i) left at room temperature for 1 hour, (ii) cured and dried in a thermostatic chamber at 75°C for 3 hours, and (iii) extracted again and left at room temperature for 24 hours. Then, fusibility and a surface property were evaluated. Note that during in-mold foaming molding, the in-mold expanded molded product was molded while the molding pressure (steam pressure) in the both-surface heating step was changed in increments of 0.01 MPa. The lowest molding pressure, at which an in-mold expanded molded product whose fusibility was evaluated as "good" or "excellent" in <Fusibility> evaluation (see below) was obtained, was regarded as a minimum molding pressure. An in-mold expanded molded product molded with the minimum molding pressure was subjected to (i) surface appearance evaluation, (ii) molded product density measurement, and (iii) 50%-strained compressive strength measurement.

<Fusibility>

The in-mold expanded molded product thus obtained was (i) notched by 5 mm in a thickness-wise direction with the use of a cutter and (ii) cleaved by hand. A cleaved surface was observed by visual inspection, and a percentage of clefts in expanded particles and not clefts in the interfaces of the expanded particles was obtained. Then, fusibility was judged by the following criteria:

Excellent: The percentage of clefts in the expanded particles was 80% or more.
Good: The percentage of clefts in the expanded particles was 60% or more to less than 80%.
Failed: The percentage of clefts in the expanded particles was less than 60% (fusibility was so low that the percentage of clefts appearing in the interfaces of the expanded particles on the cleaved surface was more than 40%).

<Surface appearance (Surface part)>

A surface having a length of 300 mm and a width of 400 mm of the in-mold expanded molded product obtained was observed by visual inspection, and a surface property was judged by the criteria as below. For the judgment of the surface property, inter-particle spaces (spaces between expanded polypropylene resin particles), which serves as one of indices for evaluating the surface property, were counted, by visual inspection, in a surface of 50 mm per side in a center part of the molded product.

EE (Extraordinarily excellent): There is no inter-particle space or one inter-particle space; there is no noticeable surface unevenness; there is no wrinkle or shrinkage and the surface is therefore beautiful.
VE (Very excellent): There are two or three inter-particle spaces; there is no noticeable surface unevenness; there is no wrinkle or shrinkage and the surface is therefore beautiful.

E (Excellent): There are four or five inter-particle spaces; there is no noticeable surface unevenness; there is no wrinkle or shrinkage and the surface is therefore beautiful.
G (Good): Six or more inter-particle spaces are observed, or some surface unevenness, shrinkage, or wrinkles are observed.
F (Failed): Inter-particle spaces, surface unevenness, shrinkage, or wrinkles are noticeable throughout the surface observed.

<Surface appearance (edge part)>

E (Excellent): An edge part (ridge part), at which two surfaces of the in-mold expanded molded product obtained intersect, had no unevenness resulting from the expanded polypropylene resin particles and had a clear ridge formed; mold transferability is good. Even if the edge part was rubbed with a finger, the expanded particles were not peeled off.
F (Failed): Unevenness resulting from the expanded polypropylene resin particles was noticeable at an edge part (ridge part); a clear ridge was not formed; mold transferability was poor. If the edge part was rubbed with a finger, then the expanded particles were easily peeled off.

(Molded product density)

A test piece, which had a size of length 50 mm × width 50 mm × thickness 25 mm, was cut out from substantially a center part of the in-mold expanded molded product obtained. Note that the test piece had a thickness of 25 mm by cutting off, by approximately 12.5 mm, each of parts containing respective surface layers of the in-mold expanded molded product. A weight W(g) of the test piece was measured, and the length, width, and thickness of the test piece were measured with the use of a caliper, so that a volume V(cm$^3$) of the test piece was calculated. Then, a molded product density was obtained by W/V. Note that a unit conversion to g/L was made on a calculated value thus obtained.

(50%-strained compressive strength and evaluation)

The test piece, whose molded product density was measured, was subjected to a compressive strength test. Specifically, a compressive stress of the test piece when the test piece was compressed by 50% at a rate of 10 mm/min. was measured with the use of a tension and compression testing machine (manufactured by Minebea Co., Ltd., TG series) in conformity with NDZ-Z0504. In addition, the 50%-strained compressive strength was evaluated as follows.
The following Formula (1) is satisfied: A
The following Formula (1) is not satisfied: B

$$[\text{50\%-strained compressive strength (MPa)}] \geq 0.0069 \times [\text{Molded product density (g/L)}] + 0.018 \ ... \ (1)$$

(Examples 1 through 16 and Comparative Examples 1 through 11)

[Production of polypropylene resin particles]

The polypropylene resin A, the polypropylene resin B, the polyethylene resin C, and additives were mixed in amounts shown in Tables 2 and 3 with the use of a blender. Each of the mixtures obtained was melted and kneaded at a resin temperature of 220°C and extruded in a strand shape with the use of a twin-screw extruder (manufactured by O. N. Machinery Co., Ltd., TEK45). The strand thus extruded was water-cooled in a water tank having a length of 2 m, and was then cut. This resulted in polypropylene resin particles (1.2 mg per particle).

[Production of first-stage expanded particles and second-stage expanded particles]

100 parts by weight of the polypropylene resin particles obtained, 300 parts by weight of water, 1.5 parts by weight of powdered basic tribasic calcium phosphate as a dispersing agent, 0.06 parts by weight of n-paraffin sulfonic acid soda as a dispersion auxiliary agent, and 5.8 parts by weight of carbon dioxide as a foaming agent were placed in a 10 L-pressure-resistant container. While a resultant dispersion liquid was stirred, a temperature of the dispersion liquid was raised to a foaming temperature shown in a corresponding part in Table 2 or 3, and the dispersion liquid was retained at the foaming temperature for 10 min. Then, carbon dioxide was additionally injected into the pressure-resistant container so that a foaming pressure was adjusted to a value shown in a corresponding part in Table 2 or 3. Then, the foaming pressure was retained for 30 min. Then, a valve at a lower part of the pressure-resistant container was opened while carbon dioxide was injected into the pressure-resistant container such that the temperature and pressure in the pressure-resistant container were retained. An aqueous dispersion medium was released from the valve into air under atmospheric pressure through an orifice plate having an opening diameter of 3.6 mm, so that expanded polypropylene resin particles (first-stage expanded particles) were obtained. A high-temperature heat quantity ratio, a cell diameter, and an expansion ratio of the first-stage expanded particles thus obtained were measured. The results are shown in a corresponding part of Table 2 or 3. Note that expanded polypropylene resin particles were subjected to DSC measurement at a heating rate of 2°C/min. In each of Examples 1 through 16 and Comparative Examples 1 through 11, the DSC curve showed the total of three endothermic peaks which are (i) one main endothermic peak in a range of 130°C to 145°C, (ii) one high temperature peak on a high temperature-side of the main endothermic peak, and (iii) one peak based on the polyethylene resin C in a range of 110°C to 137°C. In each of Example 16 and Comparative Example 9, second-stage expanded particles were obtained by introducing the first-stage expanded particles obtained into a pressure-resistant container, applying a predetermined internal pressure to the first-stage expanded particles by impregnation of air, and then heating the first-stage expanded particles with use of steam.

[Production of in-mold expanded molded product]

The first-stage expanded particles obtained or the second-stage expanded particles obtained were introduced into a pressure-resistant container. Then, pressurized air was impregnated so that internal pressure of the expanded particles was adjusted in advance as shown in a corresponding part of Table 2 or 3. Then, (i) a mold, which allows a plate-like in-mold expanded molded product having a size of length 300 mm × width 400 mm × thickness 50 mm to be obtained, was filled with the expanded polypropylene resin particles while cracking was 5 mm, which expanded polypropylene resin particles had the adjusted internal pressure and (ii) the expanded particles were heat molded by being compressed by 10% in thicknesswise directions. This resulted in a plate-like in-mold expanded molded product having a size of length 300 mm × width 400 mm × thickness 50 mm. In so doing, after the mold was filled with the expanded polypropylene resin particles having the adjusted internal pressure and the mold was then completely closed, air in the mold was purged by use of steam (preheating step), and a one-surface heating step and an other-surface heating step were then carried out. Thereafter, the expanded polypropylene resin particles were heat molded for 10 sec. by use of heating steam having a certain molding pressure (both-surface heating step). This resulted in an in-mold expanded molded product. Note that (i) the preheating step was carried out for 10 sec., (ii) the one-surface heating step was carried out for 2 sec., (iii) the other-surface heating step was carried out for 2 sec., and (iv) the both-surface heating step was carried out for 10 sec. as described above. Note also that the in-mold expanded molded product was prepared while a molding pressure (steam pressure) was changed in 0.01 MPa increments in the both-surface heating step. Tables 2 and 3 show the results of moldability evaluation, molded product density measurement, and 50%-strained compressive strength measurement.

[Table 2] ("PBW" stands for "Part by weight".)

| | | | | Examples | | | | | | | |
|---|---|---|---|---|---|---|---|---|---|---|---|
| | | | | 1 | 2 | 3 | 4 | 5 | 6 | 7 | 8 |
| Base material resin X | Polypropylene resin A | Polypropylene resin A-1 | PBW | 60 | 50 | 70 | 65 | 50 | 74 | 60 | 50 |
| | | Polypropylene resin A-2 | PBW | | | | | | | | |
| | | Polypropylene resin A-3 | PBW | | | | | | | | |
| | Polypropylene resin B | Polypropylene resin B-1 | PBW | 35 | 45 | 25 | 34 | 49 | 25 | 30 | 40 |
| | | Polypropylene resin B-2 | PBW | | | | | | | | |
| | | Polypropylene resin B-3 | PBW | | | | | | | | |
| | Polyethylene resin C | Polyethylene resin C-1 | PBW | 5 | 5 | 5 | 1 | 1 | 1 | 10 | 10 |
| | | Polyethylene resin C-2 | PBW | | | | | | | | |
| | | Polyethylene resin C-3 | PBW | | | | | | | | |
| | | Polyethylene resin C-4 | PBW | | | | | | | | |
| | Additive | Talc | PBW | 0.05 | 0.05 | 0.05 | 0.05 | 0.05 | 0.05 | 0.05 | 0.05 |
| | | Polyethylene glycol | PBW | 0.5 | 0.5 | 0.5 | 0.5 | 0.5 | 0.5 | 0.5 | 0.5 |
| | | Carbon black | PBW | | | | | | | | |
| | Physical property | Melting point based on polypropylene resins | °C | 146 | 147 | 145 | 146 | 147 | 144 | 145 | 146 |
| | | Melting point based on polyethylene resin | °C | 130 | 130 | 130 | 130 | 130 | 130 | 130 | 130 |

[Table 2] (Cont.) ("PBW" stands for "Part by weight".)

| | | | | Examples | | | | | | | |
|---|---|---|---|---|---|---|---|---|---|---|---|
| | | | | 1 | 2 | 3 | 4 | 5 | 6 | 7 | 8 |
| First-stage foaming | Foaming conditions | Amount of carbon dioxide | PBW | 5.8 | 5.8 | 5.8 | 5.8 | 5.8 | 5.8 | 5.8 | 5.8 |
| | | Foaming temperature | °C | 149 | 150 | 147 | 149 | 150 | 147 | 149 | 150 |
| | | Foaming pressure (gage pressure) | MPa | 3.3 | 3.3 | 3.3 | 3.3 | 3.3 | 3.3 | 3.3 | 3.3 |
| | Physical property | High-temperature heat quantity ratio | % | 21 | 20 | 22 | 21 | 21 | 23 | 20 | 20 |
| | | Average cell diameter | μm | 130 | 120 | 130 | 140 | 130 | 140 | 110 | 100 |
| | | Expansion ratio | Times | 20 | 21 | 19 | 21 | 20 | 19 | 21 | 21 |
| Second-stage foaming | Foaming conditions | Expanded particle internal pressure (Absolute pressure) | MPa | - | - | - | - | - | - | - | - |
| | | Heating pressure (gage pressure) | MPa | - | - | - | - | - | - | - | - |
| | Physical property | High-temperature heat quantity ratio | % | - | - | - | - | - | - | - | - |
| | | Average cell diameter | μm | - | - | - | - | - | - | - | - |
| | | Expansion ratio | Times | - | - | - | - | - | - | - | - |
| In-mold expanded molded product | Moldability | Expanded particle internal pressure (Absolute pressure) | MPa | 0.2 | 0.2 | 0.2 | 0.2 | 0.2 | 0.2 | 0.2 | 0.2 |
| | | Minimum molding pressure (gage pressure) | MPa | 0.19 | 0.19 | 0.18 | 0.19 | 0.20 | 0.19 | 0.18 | 0.18 |
| | | Surface appearance | Surface part | - | EE | EE | EE | VE | VE | VE | VE | VE |
| | | | Edge part | - | E | E | E | E | E | E | E | E |
| | Physical property | Molded product density | g/L | 30 | 30 | 30 | 30 | 30 | 30 | 30 | 30 |
| | | 50%-strained compressive strength | MPa | 0.232 | 0.234 | 0.230 | 0.233 | 0.235 | 0.230 | 0.227 | 0.230 |

| | | 50%-strained compressive strength evaluation | MPa | A | A | A | A | A | A | A | A |
|---|---|---|---|---|---|---|---|---|---|---|---|

[Table 2] (Cont.) ("PBW" stands for "Part by weight".)

| | | | | Examples | | | | | | | |
|---|---|---|---|---|---|---|---|---|---|---|---|
| | | | | 9 | 10 | 11 | 12 | 13 | 14 | 15 | 16 |
| Base material resin X | Polypropylene resin A | Polypropylene resin A-1 | PBW | 65 | | 60 | 60 | | 60 | 60 | 60 |
| | | Polypropylene resin A-2 | PBW | | 60 | | | 60 | | | |
| | | Polypropylene resin A-3 | PBW | | | | | | | | |
| | Polypropylene resin B | Polypropylene resin B-1 | PBW | 25 | 35 | | 35 | | 35 | 35 | 35 |
| | | Polypropylene resin B-2 | PBW | | | 35 | | 35 | | | |
| | | Polypropylene resin B-3 | PBW | | | | | | | | |
| | Polyethylene resin C | Polyethylene resin C-1 | PBW | 10 | 5 | 5 | | | 5 | 5 | 5 |
| | | Polyethylene resin C-2 | PBW | | | | 5 | 5 | | | |
| | | Polyethylene resin C-3 | PBW | | | | | | | | |
| | | Polyethylene resin C-4 | PBW | | | | | | | | |
| | Additive | Talc | PBW | 0.05 | 0.05 | 0.05 | 0.05 | 0.05 | 0.05 | 0.05 | 0.05 |
| | | Polyethylene glycol | PBW | 0.5 | 0.5 | 0.5 | 0.5 | 0.5 | 0.5 | 0.5 | 0.5 |
| | | Carbon black | PBW | | | | | | 6 | | |
| | Physical property | Melting point based on polypropylene resins | °C | 145 | 148 | 145 | 146 | 146 | 146 | 146 | 146 |
| | | Melting point based on polyethylene resin | °C | 130 | 130 | 130 | 124 | 124 | 130 | 130 | 130 |

[Table 2] (Cont.) ("PBW" stands for "Part by weight".)

| | | | | Examples | | | | | | | |
|---|---|---|---|---|---|---|---|---|---|---|---|
| | | | | 9 | 10 | 11 | 12 | 13 | 14 | 15 | 16 |
| First-stage foaming | Foaming conditions | Amount of carbon dioxide | PBW | 5.8 | 5.8 | 5.8 | 5.8 | 5.8 | 5.8 | 5.0 | 5.2 |
| | | Foaming temperature | °C | 147 | 151 | 148 | 149 | 149 | 149 | 152 | 151 |
| | | Foaming pressure (gage pressure) | MPa | 3.3 | 3.3 | 3.3 | 3.3 | 3.3 | 3.3 | 2.6 | 2.8 |
| | Physical property | High-temperature heat quantity ratio | % | 21 | 21 | 21 | 21 | 20 | 21 | 22 | 20 |
| | | Average cell diameter | μm | 110 | 140 | 130 | 120 | 120 | 110 | 160 | 140 |
| | | Expansion ratio | Times | 20 | 21 | 20 | 20 | 20 | 21 | 10 | 13 |
| Second-stage foaming | Foaming conditions | Expanded particle internal pressure (Absolute pressure) | MPa | - | - | - | - | - | - | - | 0.35 |
| | | Heating pressure (gage pressure) | MPa | - | - | - | - | - | - | - | 0.06 |
| | Physical property | High-temperature heat quantity ratio | % | - | - | - | - | - | - | - | 19 |
| | | Average cell diameter | μm | - | - | - | - | - | - | - | 150 |
| | | Expansion ratio | Times | - | - | - | - | - | - | - | 30 |
| In-mold expanded molded product | Moldability | Expanded particle internal pressure (Absolute pressure) | MPa | 0.2 | 0.2 | 0.2 | 0.2 | 0.2 | 0.2 | 0.2 | 0.2 |
| | | Minimum molding pressure (gage pressure) | MPa | 0.17 | 0.20 | 0.19 | 0.19 | 0.19 | 0.19 | 0.20 | 0.18 |

| | | Surface appearance | Surface part | - | VE | EE | EE | EE | EE | EE | EE | EE |
| --- | --- | --- | --- | --- | --- | --- | --- | --- | --- | --- | --- | --- |
| | | | Edge part | - | E | E | E | E | E | E | E | E |
| | Physical property | Molded product density | | g/L | 30 | 30 | 30 | 30 | 30 | 30 | 60 | 20 |
| | | 50%-strained compressive strength | | MPa | 0.226 | 0.233 | 0.231 | 0.225 | 0.225 | 0.232 | 0.520 | 0.190 |
| | | 50%-strained compressive strength evaluation | | MPa | A | A | A | A | A | A | A | A |

[Table 3] ("PBW" stands for "Part by weight".)

| | | | | Comparative Examples | | | | | | | | | | |
|---|---|---|---|---|---|---|---|---|---|---|---|---|---|---|
| | | | | 1 | 2 | 3 | 4 | 5 | 6 | 7 | 8 | 9 | 10 | 11 |
| Base material resin X | Polypropylene resin A | Polypropylene resin A-1 | PBW | 80 | 40 | 60 | 55 | | 60 | 60 | 60 | 100 | | |
| | | Polypropylene resin A-2 | PBW | | | | | | | | | | | |
| | | Polypropylene resin A-3 | PBW | | | | | 60 | | | | | | |
| | Polypropylene resin B | Polypropylene resin B-1 | PBW | 15 | 55 | 40 | 30 | 35 | | 35 | 35 | | 100 | 95 |
| | | Polypropylene resin B-2 | PBW | | | | | | | | | | | |
| | | Polypropylene resin B-3 | PBW | | | | | | 35 | | | | | |
| | Polyethylene resin C | Polyethylene resin C-1 | PBW | 5 | 5 | | 15 | 5 | 5 | | | | | 5 |
| | | Polyethylene resin C-2 | PBW | | | | | | | | | | | |
| | | Polyethylene resin C-3 | PBW | | | | | | | | 5 | | | |
| | | Polyethylene resin C-4 | PBW | | | | | | | | | 5 | | |
| | Additive | Talc | PBW | 0.05 | 0.05 | 0.05 | 0.05 | 0.05 | 0.05 | 0.05 | 0.05 | 0.05 | 0.05 | 0.05 |
| | | Polyethylene glycol | PBW | 0.5 | 0.5 | 0.5 | 0.5 | 0.5 | 0.5 | 0.5 | 0.5 | 0.5 | 0.5 | 0.5 |
| | Physical property | Melting point based on polypropylene resins | °C | 141 | 148 | 146 | 145 | 148 | 141 | 146 | 146 | 134 | 153 | 152 |
| | | Melting point based on polyethylene resin | °C | 130 | 130 | | 130 | 130 | 130 | 114 | 137 | | | 130 |
| First-stage foaming | Foaming conditions | Amount of carbon dioxide | PBW | 5.8 | 5.8 | 5.8 | 5.8 | 5.8 | 5.8 | 5.8 | 5.8 | 6.5 | 5.8 | 5.8 |
| | | Foaming temperature | °C | 145 | 151 | 149 | 149 | 149 | 145 | 149 | 149 | 135 | 154 | 153 |
| | | Foaming pressure (gage pressure) | MPa | 3.4 | 3.2 | 3.3 | 3.3 | 3.3 | 3.4 | 3.3 | 3.3 | 3.4 | 3.0 | 3.0 |
| | Physical property | High-temperature heat quantity ratio | % | 21 | 20 | 22 | 18 | 23 | 22 | 21 | 22 | 20 | 22 | 21 |
| | | Average cell diameter | $\mu$m | 100 | 120 | 140 | 100 | 130 | 120 | 100 | 110 | 100 | 130 | 120 |
| | | Expansion ratio | Times | 18 | 22 | 19 | 18 | 20 | 18 | 21 | 20 | 14 | 21 | 20 |

(continued)

| | | | | Comparative Examples | | | | | | | | | | |
|---|---|---|---|---|---|---|---|---|---|---|---|---|---|---|
| | | | | 1 | 2 | 3 | 4 | 5 | 6 | 7 | 8 | 9 | 10 | 11 |
| Second-stage foaming | Foaming conditions | Expanded particle internal pressure (Absolute pressure) | MPa | - | - | - | - | - | - | - | - | 0.35 | - | - |
| | | Heating pressure (gage pressure) | MPa | - | - | - | - | - | - | - | - | 0.05 | - | - |
| | Physical property | High-temperature heat quantity ratio | % | - | - | - | - | - | - | - | - | 19 | - | - |
| | | Average cell diameter | $\mu$m | - | - | - | - | - | - | - | | 110 | - | - |
| | | Expansion ratio | Times | - | - | - | - | - | - | - | | 21 | - | - |
| In-mold expanded molded product | Moldability | Expanded particle internal pressure (Absolute pressure) | MPa | 0.2 | 0.2 | 0.2 | 0.2 | 0.2 | 0.2 | 0.2 | 0.2 | 0.2 | 0.2 | 0.2 |
| | | Minimum molding pressure (page pressure) | MPa | 0.18 | 0.24 | 0.20 | 0.17 | 0.24 | 0.19 | 0.18 | 0.20 | 0.17 | 0.28 | 0.27 |
| | | Surface appearance — Surface part | - | EE | EE | E | E | EE | EE | VE | G | E | E | E |
| | | Surface appearance — Edge part | - | E | E | E | E | E | E | E | E | E | E | E |
| | Physical property | Molded product density | q/L | 30 | 30 | 30 | 30 | 30 | 30 | 30 | 30 | 30 | 30 | 30 |
| | | 50%-strained compressive strength | MPa | 0.200 | 0.237 | 0.232 | 0.175 | 0.235 | 0.215 | 0.180 | 0.232 | 0.195 | 0.270 | 0.260 |
| | | 50%-strained compressive strength evaluation | - | B | A | A | B | A | B | B | A | B | A | A |

EP 3 235 860 B1

Comparisons between the molded products having substantially identical molded product densities indicate that (i) those in Examples can be molded with a low molding pressure and exhibit higher 50%-strained compressive strength and (ii) those in Comparative Examples exhibit decreased 50%-strained compressive strength with a low molding pressure and demand a higher molding pressure for high 50%-strained compressive strength.

The present invention is not limited to the embodiments and Examples described above, but can be altered by a skilled person in the art within the scope of the claims. The present invention also encompasses, in its technical scope, any embodiment derived by combining technical means disclosed in different embodiments and Examples. Further, it is possible to form a new technical feature by combining the technical means disclosed in the respective embodiments and Examples.

Industrial Applicability

The present invention can be used for production of, for example, automobile interior materials, automobile bumper core materials, heat insulating materials, shock-absorbing packing materials, and returnable containers.

Reference Signs List

Tm (pp): Melting maximum peak point of polypropylene resin composition X based on respective melting points of polypropylene resin A and polypropylene resin B in DSC curve of second temperature rise

Tm (pe): Peak melting point of polypropylene resin composition X based on melting point of polyethylene resin C in DSC curve of second temperature rise

Point A: Heat absorption quantity of expanded polypropylene resin particles at 80°C in DSC curve of first temperature rise

Point B: Heat absorption quantity of expanded polypropylene resin particles at temperature at which melting on high temperature side ends in DSC curve of first temperature rise

Point C: Point at which heat absorption quantity of expanded polypropylene resin particles becomes smallest between two melting heat quantity regions in DSC curve of first temperature rise, the two melting heat quantity regions being region of low temperature-side melting heat quantity and region of high temperature-side melting heat quantity

Point D: Point at which line segment A-B intersects line that is drawn so as to extend, parallel to Y-axis, from point C toward line segment A-B in DSC curve of first temperature rise of expanded polypropylene resin particles

Qh: High temperature-side melting heat quantity of expanded polypropylene resin particles in DSC curve of first temperature rise

Ql: Low temperature-side melting heat quantity of expanded polypropylene resin particles in DSC curve of first temperature rise

**Claims**

1. An expanded polypropylene resin particle comprising:

   a polypropylene resin composition X which serves as a base material resin, the polypropylene resin composition X including:

   a polypropylene resin A having a melting point of 140°C or lower;
   a polypropylene resin B having a melting point of 145°C or higher; and
   a polyethylene resin C having a melting point of 120°C or higher to 135°C or lower,

   the polypropylene resin A accounting for 50 weight% or more to 75 weight% or less, the polypropylene resin B accounting for 25 weight% or more to 50 weight% or less, and the polyethylene resin C accounting for 1 weight% or more to 10 weight% or less, with respect to a total amount of the polypropylene resin A, the polypropylene resin B, and the polyethylene resin C as 100 weight%, the melting point of the resins being measured as described in the examples of the description.

2. The expanded polypropylene resin particle as set forth in claim 1, wherein the polypropylene resin A is a propylene-ethylene-1-butene random copolymer.

**3.** The expanded polypropylene resin particle as set forth in claim 1 or 2, wherein the polypropylene resin B is a propylene-ethylene random copolymer or a propylene-ethylene-1-butene random copolymer.

**4.** The expanded polypropylene resin particle as set forth in any one of claims 1 to 3, wherein the melting point of the polyethylene resin C is 125°C or higher to 135°C or lower.

**5.** The expanded polypropylene resin particle as set forth in any one of claims 1 to 4, wherein a melting point of the polypropylene resin composition X is 140°C or higher to 150°C or lower,
wherein the melting point of the polypropylene resin composition X is measured with the use of a differential scanning calorimeter DSC, wherein the melting point tm is found as a melting peak temperature in a second temperature rise on a DSC curve obtained by (i) raising a temperature of 5 mg to 6 mg of the polypropylene resin from 40°C to 220°C at a heating rate of 10°C/min. so as to melt the polypropylene resin, (ii) lowering the temperature from 220°C to 40°C at a cooling rate of 10°C/min, so as to crystallize the polypropylene resin X and then (iii) raising the temperature again from 40°C to 220°C at a heating rate of 10°C/min.

**6.** The expanded polypropylene resin particle as set forth in any one of claims 1 to 5, wherein the polypropylene resin A and the polypropylene resin B are Ziegler-Natta polypropylene resins.

**7.** A polypropylene resin in-mold expanded molded product using expanded polypropylene resin particles recited in any one of claims 1 to 6.

**8.** The polypropylene resin in-mold expanded molded product as set forth in claim 7, wherein the polypropylene resin in-mold expanded molded product has a density and a 50%-strained compressive strength which are related so as to satisfy the following Formula (1):

$$[50\%\text{-strained compressive strength (MPa)}] \geq 0.0069 \times [\text{Molded product density (g/L)}] + 0.018 \ldots (1),$$

wherein the 50%-strained compressive strength is determined by subjecting a test piece, whose molded product density has been measured, to a compressive strength test, wherein a compressive stress of the test piece when the test piece is compressed by 50% at a rate of 10 mm/min is measured with the use of a tension and compression testing machine in conformity with NDZ-Z0504.

**9.** A method of producing expanded polypropylene resin particles, comprising the step of:
obtaining expanded polypropylene resin particles by

(i) placing polypropylene resin particles, water, and an inorganic gas foaming agent in a pressure-resistant container, so that a mixture is obtained, the polypropylene resin particles comprising:

a polypropylene resin composition X which serves as a base material resin, the polypropylene resin composition X including:

50 weight% or more to 75 weight% or less of a polypropylene resin A having a melting point of 140°C or lower;
25 weight% or more to 50 weight% or less of a polypropylene resin B having a melting point of 145°C or higher; and
1 weight% or more to 10 weight% or less of a polyethylene resin C having a melting point of 120°C or higher to 135°C or lower,

the polypropylene resin A, the polypropylene resin B, and the polyethylene resin C accounting for 100 weight% in total, the melting point of the resins being measured as described in the examples of the description.

(ii) dispersing the polypropylene resin particles and the inorganic gas foaming agent in the water while the polypropylene resin particles and the inorganic gas foaming agent are stirred, so that a dispersion liquid is obtained,

(iii) increasing a temperature and a pressure in the pressure-resistant container, and then
(iv) releasing the dispersion liquid in the pressure-resistant container into a region having a pressure lower than an internal pressure of the pressure-resistant container, so that the polypropylene resin particles are foamed.

10. The method as set forth in claim 9, wherein the polypropylene resin A is a propylene-ethylene-1-butene random copolymer.

11. The method as set forth in claim 9 or 10, wherein the polypropylene resin B is a propylene-ethylene random copolymer or a propylene-ethylene-1-butene random copolymer.

12. The method as set forth in any one of claims 9 to 11, wherein the melting point of the polyethylene resin C is 125°C or higher to 135°C or lower.

13. The method as set forth in any one of claims 9 to 12, wherein melting point of the polypropylene resin composition X is 140°C or higher to 150°C or lower,
wherein the melting point of the polypropylene resin composition X was measured with the use of a differential scanning calorimeter DSC, wherein the melting point tm is found as a melting peak temperature in a second temperature rise on a DSC curve obtained by (i) raising a temperature of 5 mg to 6 mg of the polypropylene resin from 40°C to 220°C at a heating rate of 10°C/min. so as to melt the polypropylene resin, (ii) lowering the temperature from 220°C to 40°C at a cooling rate of 10°C/min, so as to crystallize the polypropylene resin X and then (iii) raising the temperature again from 40°C to 220°C at a heating rate of 10°C/min.

14. The method as set forth in any one of claims 9 to 13, wherein the polypropylene resin A and the polypropylene resin B are Ziegler-Natta polypropylene resins.

**Patentansprüche**

1. Ein expandiertes Polypropylenharzteilchen, umfassend:

eine Polypropylenharzzusammensetzung X, die als ein Basismaterialharz dient, wobei die Polypropylenharzzusammensetzung X enthält:

ein Polypropylenharz A mit einem Schmelzpunkt von 140°C oder niedriger;
ein Polypropylenharz B mit einem Schmelzpunkt von 145°C oder höher; und
ein Polyethylenharz C mit einem Schmelzpunkt von 120°C oder höher bis 135°C oder niedriger,

wobei das Polypropylenharz A 50 Gew.-% oder mehr bis 75 Gew.-% oder weniger ausmacht, das Polypropylenharz B 25 Gew.-% oder mehr bis 50 Gew.-% oder weniger ausmacht, und das Polyethylenharz C 1 Gew.-% oder mehr bis 10 Gew.-% oder weniger ausmacht, bezogen auf eine Gesamtmenge des Polypropylenharzes A, des Polypropylenharzes B und des Polyethylenharzes C als 100 Gew.-%, wobei der Schmelzpunkt der Harze wie in den Beispielen der Beschreibung beschrieben gemessen wird.

2. Das expandierte Polypropylenharzteilchen wie in Anspruch 1 angegeben, wobei das Polypropylenharz A ein statistisches Propylen-Ethylen-1-Buten-Copolymer ist.

3. Das expandierte Polypropylenharzteilchen wie in Anspruch 1 oder 2 angegeben, wobei das Polypropylenharz B ein statistisches Propylen-Ethylen-Copolymer oder ein statistisches Propylen-Ethylen-1-Buten-Copolymer ist.

4. Das expandierte Polypropylenharzteilchen wie in einem der Ansprüche 1 bis 3 angegeben, wobei der Schmelzpunkt des Polyethylenharzes C bei 125°C oder höher bis 135°C oder niedriger liegt.

5. Das expandierte Polypropylenharzteilchen wie in einem der Ansprüche 1 bis 4 angegeben, wobei ein Schmelzpunkt der Polypropylenharzzusammensetzung X bei 140°C oder höher bis 150°C oder niedriger liegt,
wobei der Schmelzpunkt der Polypropylenharzzusammensetzung X unter Verwendung eines Differentialscanningkalorimeters DSC gemessen wird, wobei der Schmelzpunkt tm als eine Schmelzpeaktemperatur bei einer zweiten Temperaturerhöhung auf einer DSC-Kurve, erhalten durch (i) Erhöhen einer Temperatur von 5 mg bis 6 mg des Polypropylenharzes von 40°C auf 220°C bei einer Erwärmungsrate von 10°C/Min., um das Polypropylenharz zu schmelzen, (ii) Senken der Temperatur von 220°C auf 40°C bei einer Kühlrate von 10°C/Min., um das Polypropylenharz X zu kristallisieren und dann (iii) erneutes Erhöhen der Temperatur von 40°C auf 220°C bei einer Erwärmungsrate von 10°C/Min., ermittelt wird.

6. Das expandierte Polypropylenharzteilchen wie in einem der Ansprüche 1 bis 5 angegeben, wobei das Polypropylenharz A und das Polypropylenharz B Ziegler-Natta-Polypropylenharze sind.

7. Ein in einer Form expandierter Polypropylenharz-Formkörper, der expandierte Polypropylenharzteilchen, wie in einem der Ansprüche 1 bis 6 genannt, verwendet.

8. Der in einer Form expandierte Polypropylenharz-Formkörper wie in Anspruch 7 angegeben, wobei der in einer Form expandierte Polypropylenharz-Formkörper eine Dichte und eine Druckfestigkeit bei 50% Verformung aufweist, welche so zueinander in Beziehung stehen, dass sie die nachstehende Formel (1) erfüllen:

$$[\text{Druckfestigkeit bei 50\% Verformung (MPa)}] \geq 0{,}0069 \times [\text{Formkörperdichte (g/l)}] + 0{,}018 \dots (1),$$

wobei die Druckfestigkeit bei 50% Verformung durch Unterziehen eines Prüfstücks, dessen Formkörperdichte gemessen wurde, einer Druckfestigkeitsprüfung, wobei eine Druckbeanspruchung des Prüfstücks, wenn das Prüfstück um 50% mit einer Geschwindigkeit von 10 mm/Min. komprimiert wird, mithilfe einer Zug- und Druckprüfmaschine gemäß NDZ-Z0504 gemessen wird.

9. Ein Verfahren zur Herstellung von expandierten Polypropylenharzteilchen, umfassend den Schritt:
Erhalten von expandierten Polypropylenharzteilchen durch

(i) Platzieren von Polypropylenharzteilchen, Wasser und eines Schaumbildners aus anorganischem Gas in einem druckfesten Behälter, um ein Gemisch zu erhalten, wobei die Polypropylenharzteilchen umfassen:

eine Polypropylenharzzusammensetzung X, die als ein Basismaterialharz dient,
wobei die Polypropylenharzzusammensetzung X enthält:

50 Gew.-% oder mehr bis 75 Gew.-% oder weniger eines Polypropylenharzes A mit einem Schmelzpunkt von 140°C oder niedriger;
25 Gew.-% oder mehr bis 50 Gew.-% oder weniger eines Polypropylenharzes B mit einem Schmelzpunkt von 145°C oder höher; und
1 Gew.-% oder mehr bis 10 Gew.-% oder weniger eines Polyethylenharzes C mit einem Schmelzpunkt von 120°C oder höher bis 135°C oder niedriger,

wobei das Polypropylenharz A, das Polypropylenharz B und das Polyethylenharz C insgesamt 100 Gew.-% ausmachen, wobei der Schmelzpunkt der Harze wie in den Beispielen der Beschreibung beschrieben gemessen wird,

(ii) Dispergieren der Polypropylenharzteilchen und des Schaumbildners aus anorganischem Gas in dem Wasser, während die Polypropylenharzteilchen und der Schaumbildner aus anorganischem Gas gerührt werden, so dass eine Dispersionsflüssigkeit erhalten wird,
(iii) Erhöhen einer Temperatur und eines Drucks in dem druckfesten Behälter, und dann
(iv) Freisetzen der Dispersionsflüssigkeit in dem druckfesten Behälter in einen Bereich mit einem Druck, der niedriger als ein innerer Druck des druckfesten Behälters ist, so dass die Polypropylenharzteilchen geschäumt werden.

10. Das Verfahren wie in Anspruch 9 angegeben, wobei das Polypropylenharz A ein statistisches Propylen-Ethylen-1-Buten-Copolymer ist.

11. Das Verfahren wie in Anspruch 9 oder 10 angegeben, wobei das Polypropylenharz B ein statistisches Propylen-Ethylen-Copolymer oder ein statistisches Propylen-Ethylen-1-Buten-Copolymer ist.

**12.** Das Verfahren wie in einem der Ansprüche 9 bis 11 angegeben, wobei der Schmelzpunkt des Polyethylenharzes C bei 125°C oder höher bis 135°C oder neidriger liegt.

**13.** Das Verfahren wie in einem der Ansprüche 9 bis 12 angegeben, wobei der Schmelzpunkt der Polypropylenharzzusammensetzung X bei 140°C oder höher bis 150°C oder niedriger liegt,
wobei der Schmelzpunkt der Polypropylenharzzusammensetzung X unter Verwendung eines Differentialscanningkalorimeters DSC gemessen wird, wobei der Schmelzpunkt tm als eine Schmelzpeaktemperatur bei einer zweiten Temperaturerhöhung auf einer DSC-Kurve, erhalten durch (i) Erhöhen einer Temperatur von 5 mg bis 6 mg des Polypropylenharzes von 40°C auf 220°C bei einer Erwärmungsrate von 10°C/Min., um das Polypropylenharz zu schmelzen, (ii) Senken der Temperatur von 220°C auf 40°C bei einer Kühlrate von 10°C/Min., um das Polypropylenharz X zu kristallisieren und dann (iii) erneutes Erhöhen der Temperatur von 40°C auf 220°C mit einer Erwärmungsrate von 10°C/Min., ermittelt wird.

**14.** Das Verfahren wie in einem der Ansprüche 9 bis 13 angegeben, wobei das Polypropylenharz A und das Polypropylenharz B Ziegler-Natta-Polypropylenharze sind.

**Revendications**

**1.** Particule de résine de polypropylène expansée comprenant :

une composition de résine de polypropylène X qui sert de résine de matériau de base, la composition de résine de polypropylène X contenant :

une résine de polypropylène A ayant un point de fusion de 140 °C ou moins ;
une résine de polypropylène B ayant un point de fusion de 145 °C ou plus ; et
une résine de polyéthylène C ayant un point de fusion de 120 °C ou plus à 135 °C ou moins,

la résine de polypropylène A représentant de 50 % en poids ou plus à 75 % en poids ou moins, la résine de polypropylène B représentant de 25 % en poids ou plus à 50 % en poids ou moins, et la résine de polyéthylène C représentant de 1 % en poids ou plus à 10 % en poids ou moins, par rapport à la quantité totale de la résine de polypropylène A, de la résine de polypropylène B, et de la résine de polyéthylène C représentant 100 % en poids, le point de fusion des résines étant mesuré comme décrit dans les exemples de la description.

**2.** Particule de résine de polypropylène expansée selon la revendication 1, dans laquelle la résine de polypropylène A est un copolymère statistique de propylène-éthylène-butène-1.

**3.** Particule de résine de polypropylène expansée selon la revendication 1 ou 2, dans laquelle la résine de polypropylène B est un copolymère statistique de propylène-éthylène ou un copolymère statistique de propylène-éthylène-butène-1.

**4.** Particule de résine de polypropylène expansée selon l'une quelconque des revendications 1 à 3, dans laquelle le point de fusion de la résine de polyéthylène C est de 125 °C ou plus à 135 °C ou moins.

**5.** Particule de résine de polypropylène expansée selon l'une quelconque des revendications 1 à 4,
dans laquelle le point de fusion de la composition de résine de polypropylène X est de 140 °C ou plus à 150 °C ou moins,
dans laquelle le point de fusion de la composition de résine de polypropylène X est mesuré par utilisation d'un calorimètre à balayage différentiel DSC, dans laquelle le point de fusion Tm est trouvé sous la forme d'une température de pic de fusion lors d'une deuxième montée en température sur la courbe de DSC obtenue par (i) élévation de la température de 5 mg à 6 mg de la résine de polypropylène de 40 °C à 220 °C à une vitesse de chauffage de 10°C/min de façon que la résine de polypropylène fonde, (ii) abaissement de la température de 220 °C à 40 °C à une vitesse de refroidissement de 10 °C/min, de façon que la résine de polypropylène X cristallise, et ensuite (iii) de nouveau élévation de la température de 40 °C à 220 °C à une vitesse de chauffage de 10 °C/min.

**6.** Particule de résine de polypropylène expansée selon l'une quelconque des revendications 1 à 5, dans laquelle la résine de polypropylène A et la résine de polypropylène B sont des résines de polypropylène de Ziegler-Natta.

**7.** Produit moulé expansé dans le moule en résine de polypropylène utilisant les particules de résine de polypropylène expansées définies dans l'une quelconque des revendications 1 à 6.

8.  Produit moulé expansé dans le moule en résine de polypropylène selon la revendication 7, lequel produit moulé expansé dans le moule en résine de polypropylène a une masse volumique et une résistance à la compression avec une déformation de 50 % qui sont mises en relation de façon à satisfaire à la formule (1) suivante :

$$[\text{résistance à la compression avec une déformation de 50 \% (MPa)}] \geq 0{,}0069 \text{ x}$$

$$[\text{masse volumique du produit moulé (g/l)}] + 0{,}018 \quad \dots (1),$$

dans laquelle la résistance à la compression avec une déformation de 50 % est déterminée par soumission d'une pièce test, dont la masse volumique du produit moulé a été mesurée, à un test de résistance à la compression, et dans laquelle la résistance à la compression de la pièce test quand la pièce test est comprimée de 50 % à une vitesse de 10 mm/min est mesurée par l'utilisation d'une machine de test de tension et de compression conformément à la norme NDZ-Z0504.

9.  Méthode de production de particules de résine de polypropylène expansées, comprenant les étapes suivantes : obtention de particules de résine de polypropylène expansées par

(i) placement de particules de résine de polypropylène, d'eau, et d'un agent moussant de type gaz inorganique dans un récipient résistant à la pression, de façon qu'un mélange soit obtenu, les particules de résine de polypropylène comprenant :

une composition de résine de polypropylène X qui sert de résine de matériau de base, la composition de résine de polypropylène X contenant :

50 % en poids ou plus à 75 % en poids ou moins d'une résine de polypropylène A ayant un point de fusion de 140 °C ou moins ;
25 % en poids ou plus à 50 % en poids ou moins d'une résine de polypropylène B ayant un point de fusion de 145 °C ou plus ; et
1 % en poids ou plus à 10 % en poids ou moins d'une résine de polyéthylène C ayant un point de fusion de 120 °C ou plus à 135 °C ou moins,

la résine de polypropylène A, la résine de polypropylène B, et la résine de polyéthylène C représentant 100 % en poids au total, et le point de fusion des résines étant mesuré comme décrit dans les exemples de la description,

(ii) dispersion des particules de résine de polypropylène et de l'agent moussant de type gaz inorganique dans l'eau pendant que les particules de résine de polypropylène et l'agent moussant de type gaz inorganique sont agités, si bien qu'un liquide de dispersion est obtenu,
(iii) augmentation de la température et de la pression du récipient résistant à la pression, et ensuite
(iv) libération du liquide de dispersion se trouvant dans le récipient résistant à la pression dans une région ayant une pression inférieure à la pression interne du récipient résistant à la pression, si bien que les particules de résine de polypropylène sont expansées.

10. Méthode selon la revendication 9, dans laquelle la résine de polypropylène A est un copolymère statistique de propylène-éthylène-butène-1.

11. Méthode selon la revendication 9 ou 10, dans laquelle la résine de polypropylène B est un copolymère statistique de propylène-éthylène ou un copolymère statistique de propylène-éthylène-butène-1.

12. Méthode selon l'une quelconque des revendications 9 à 11, dans laquelle le point de fusion de la résine de polyéthylène C est de 125 °C ou plus à 135 °C ou moins.

13. Méthode selon l'une quelconque des revendications 9 à 12, dans laquelle le point de fusion de la composition de résine de polypropylène X est de 140 °C ou plus à 150 °C ou moins,
dans laquelle le point de fusion de la composition de résine de polypropylène X a été mesuré par utilisation d'un calorimètre à balayage différentiel DSC, dans laquelle le point de fusion Tm est trouvé sous la forme d'une température de pic de fusion lors d'une deuxième montée en température sur la courbe de DSC obtenue par (i) élévation de la température de 5 mg à 6 mg de la résine de polypropylène de 40 °C à 220 °C à une vitesse de chauffage de 10 °C/min de façon que la résine de polypropylène fonde, (ii) abaissement de la température de 220 °C à 40 °C à une vitesse de refroidissement de 10 °C/min, de façon que la résine de polypropylène X cristallise, et ensuite (iii) de nouveau élévation de la température de 40 °C à 220 °C à une vitesse de chauffage de 10 °C/min.

**14.** Méthode selon l'une quelconque des revendications 9 à 13, dans laquelle la résine de polypropylène A et la résine de polypropylène B sont des résines de polypropylène de Ziegler-Natta.

## FIG. 1

DSC CURVE OF SECOND TEMPERATURE RISE OF POLYPROPYLENE RESIN COMPOSITION X

FIG. 2

DSC CURVE OF EXPANDED POLYPROPYLENE RESIN PARTICLES

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008139822 A
- WO 2009001626 A
- JP 2009144096 A
- JP 2010144078 A
- CN 103509203
- WO 2006054727 PCT
- WO 2009051035 PCT

- JP 2008106150 A
- JP 2006096805 A
- JP 2008255286 A
- JP 2014173012 A
- JP 10251437 A
- EP 1829919 A1